# EUROPEAN PATENT APPLICATION

(11) **EP 4 535 057 A1**
(43) Date of publication of application: **09.04.2025**
(21) Application number: 23816391.9
(22) Date of filing: 01.06.2023
(51) Int. Cl.: G02B 7/02, G02B 27/18, G02B 27/01, G02B 13/00, G02B 13/10, G02B 27/42, G02B 7/18, G03B 21/10

(54) **OPTICAL DEVICE AND ELECTRONIC DEVICE COMPRISING SAME**

(30) Priority: 02.06.2022 KR 20220067330; 22.08.2022 KR 20220104649
(71) Applicant: LG INNOTEK CO. LTD, Gangseo-gu Seoul 07796 (KR)
(72) Inventor: KIM, Ji Sung, Seoul 07796 (KR); SEO, Eun Seong, Seoul 07796 (KR); JI, Jung Goo, Seoul 07796 (KR)
(74) Representative: Plasseraud IP
(86) International application number: PCT/KR2023/007548
(87) International publication number: WO 2023/234731

(57) **Abstract**

An embodiment discloses an optical device comprising: a plurality of lenses; a barrel in which the plurality of lenses are disposed; a first light guide disposed in the barrel; and an opening formed on a side surface of the barrel, wherein the first light guide is disposed between two lenses from among the plurality of lenses, and the opening overlaps the first light guide in a direction perpendicular to an optical axis.

## Description

### [Technical Field]

Embodiments disclosed herein relate to an optical device and an electronic device including the optical device.

### [Background Art]

Virtual reality (VR) refers to a specific environment, situation, or technology itself that is created by employing an artificial technology that uses a computer or the like, and thus simulates reality, but is not actual reality.

Augmented reality (AR) refers to a technology that superimposes a virtual object or information onto a real environment and enables the virtual object to appear as if present in the original environment.

Mixed reality (MR) or Hybrid reality refers to the creation of a new environment or new information by mixing a virtual world with the real world. Particularly, mixed reality refers to the real-time interaction between the real-time presence of an object in the real world and the real-time presence of an object in a virtual world.

At this point, a created virtual environment, situation, or the like stimulates a user's five senses and enables the user to spatially or temporally experience a virtual world similar to the real world, thereby freely blurring the border between reality and imagination. In addition, the user can not only be simply immersed in this environment, but also interact with objects created in the environment by executing operations, commands, or related tasks using an actual device.

In recent years, research has actively been conducted on devices (or gears) used in this technology field. However, there is an emerging need to miniaturize these devices and provide high resolution.

### [Disclosure]

### [Technical Problem]

An object of the embodiments is to provide an optical device with a more compact size and improved optical uniformity and an electronic device including the optical device, both the optical device and the electronic device being intended for use in augmented reality (AR) or similar applications.

Another object of the embodiments is to provide an optical device with improved resolution and an electronic device including the optical device.

Still another object of the embodiments is to provide an optical device with improved reliability and an electronic device including the optical device.

Yet another object of the embodiments is to provide an optical device that is easy to inspect, with enhanced bonding force and durability, and an electronic device including the optical device.

The objects of the embodiments are not limited to those mentioned above, but may include other objects or effects that can be identified from the means of solving the problem and the embodiments, both of which are described below.

### [Technical Solution]

An optical device according to the embodiments includes: a plurality of lenses; a barrel in which the plurality of lenses are arranged; a first light guide arranged in the barrel; and an opening portion formed in a lateral surface of the barrel, wherein the first light guide is arranged between two lenses of the plurality of lenses, and wherein the opening portion overlaps with the first light guide in a direction perpendicular to an optical axis.

The optical device may include a light source device coupled to the opening portion.

In the optical device, the light source device may include a housing in which an opening is formed; a second light guide arranged in the housing; and a light source emitting light toward the second light guide.

The optical device may include a medium lens arranged between the opening and the second light guide.

The optical device may include a light signal generation unit generating a light signal including image information, wherein the plurality of lenses may include a first lens arranged at the remotest position from the light signal generation unit, and an N-th lens arranged most adjacent to the light signal generation unit, and wherein the first light guide may be positioned between the first lens and the N-th lens.

In the optical device, the first light guide may include a first prism, and the second light guide may include a second prism.

In the optical device, the first prism may include a polarized separation member that reflects first polarized light and transmits second polarized light, and the second prism may result from coupling at least two prisms.

In the optical device, the second prism may have at least two coated surfaces, and one of the at least two coated surfaces may reflect light with a first wavelength and light with a second wavelength and may transmit light with a third wavelength.

The optical device may include a third light guide arranged between the first light guide and the second light guide.

In the optical device, the third light guide may include a third prism.

An optical device according to the embodiments includes: a barrel, first and N-th lenses sequentially arranged at the first and last positions, respectively, in the barrel; a first light guide arranged between the first and N-th lenses; an opening portion formed in a lateral surface of the barrel, and a light source device emitting light incident on the first light guide through the opening portion, wherein the opening portion is arranged in a region in which the first light guide is arranged.

In the optical device, the light source device may include: a housing in which an opening is formed; a second light guide arranged in the housing;
a light source emitting light toward the second light guide; and a medium lens arranged between the opening and the second light guide.

The optical device may include a second lens arranged between the first lens and the N-th lens, wherein the first light guide may be arranged between the first lens and the second lens.

The optical device may include a second lends arranged between the first and N-th lenses, wherein the first light guide may be arranged between the second lens and the N-th lens.

The optical device may include a light signal generation unit converting light, which is incident on the first light guide and passes through the N-th lens, into a light signal including image information, wherein the light signal generated by the light signal generation unit may be transferred to the first lens through the N-th lens and the first light guide.

The optical device may include a display unit which is arranged in front of the first lens and on which the light signal transferred to the first lens and including the image information is displayed.

In the optical device, at least one portion of the light signal generated by the light signal generation unit may pass through or reflected from the first light guide.

In the optical device, the first light guide may reflect to the N-th lens at least one portion of light that is emitted from the light source and is incident on the first light guide.

In the optical device, the medium lens may have a first surface adjacent to the first light guide and a second surface corresponding to the first surface.

In the optical device, the second surface may be convex toward the second light guide.

In the optical device, the first surface may be convex or concave toward the second guide.

### [Advantageous Effects]

According to the embodiments, an optical device with a more compact size and improved optical uniformity and an electronic device including the optical device can be implemented, both the optical device and the electronic device being intended for use in augmented reality (AR) or similar applications.

In addition, an optical device with improved resolution and an electronic device including the optical device can be implemented.

In addition, an optical device with improved reliability and an electronic device including the optical device can be implemented.

In addition, an optical device that is easy to inspect, with enhanced bonding force, and durability and an electronic device including the optical device can be implemented.

Various useful advantages and effects of the present invention are not limited to those mentioned above and can be better understood from detailed descriptions of the embodiments of the present invention.

### [Description of Drawings]

FIG. 1 is a conceptual view illustrating an embodiment of an AI apparatus.
FIG. 2 is a block diagram illustrating the configuration of an extended reality electronic device according to an embodiment of the present invention.
FIG. 3 is a perspective view illustrating an augmented reality electronic device according to a first embodiment of the present invention.
FIGS. 4 to 6 are conceptual views that are referenced to describe various display techniques that are applicable to a display unit according to an embodiment of the present invention.
FIG. 7 is a conceptual view illustrating an optical device according to a first embodiment.
FIG. 8 is a perspective view illustrating the optical device according to the first embodiment.
FIG. 9 is an exploded perspective view illustrating the optical device according to the first embodiment.
FIG. 10 a cross-sectional view taken along line A-A' on FIG. 8.
FIG. 11 is an enlarged cross-sectional view illustrating Portion K1 of FIG. 10.
FIG. 12a is an enlarged cross-sectional view illustrating Portion K2 of FIG. 10.
FIG. 12b is a cross-sectional view illustrating a modification example of Portion K2 of FIG. 12a.
FIG. 12c is a cross-sectional view illustrating another modification example of Portion K2 of FIG. 12a.
FIG. 12d is a cross-sectional view illustrating still another modification example of Portion K2 of FIG. 12a.
FIG. 13a is a conceptual view illustrating an optical device according to a second embodiment.
FIG. 13b is a view illustrating a modification example of the optical device in FIG. 13a.
FIG. 13c is a view illustrating another modification example of the optical device in FIG. 13a.
FIG. 14a is a conceptual view illustrating an optical device according to a third embodiment.
FIG. 14b is a view illustrating a modification example of the optical device in FIG.14a.
FIG. 14c is a view illustrating another modification example of the optical device in FIG. 14a.
FIG. 15a is a conceptual view illustrating an optical device according to a fourth embodiment.
FIG. 15b is a view illustrating a modification example of the optical device in FIG. 15a.
FIG. 15c is a view illustrating another modification example of the optical device in FIG. 15a.

### [Mode for Invention]

Preferred embodiments of the present invention will be described in detail below with reference to the accompanying drawings.

However, the technical idea of the present invention is not limited to one or several described embodiments and may be implemented in various different forms. One or more constituent elements of these embodiments may be used through selective coupling and substitution within the scope of the technical idea of the present invention.

In addition, unless otherwise definitely defined and used, terms (including technical and scientific terms) used in the embodiment of the present invention may be construed as having the meaning normally understandable to a person of ordinary skill in the art to which the present invention pertains. Terms used normally like those defined in dictionaries may be construed to have the meanings defined considering contextual meaning in the pertinent technology.

In addition, the terms used in the embodiments of the present invention are used to describe them and are not intended to impose any limitation on the present invention.

Throughout the present specification, singular nouns are intended to include their plural forms, unless the context explicitly dictates otherwise. In a case where the expression "at least one (or one or more) of the following: A, B, or C" is used, the expression may be construed to include one or more of possible combinations made up of A, B, and C, whether individually or collectively.

In addition, the terms first, second, and so on, the terms A, B, and so on, the terms (a), (b), and so on, and similar terms may be used in describing constituent elements according to the embodiments of the present invention.

These terms are used only to distinguish one constituent element from another and do not impose limitations on the nature, order, sequence, or the like of these constituent elements.

In a case where one constituent element is described as being "connected to," "coupled to," or "having access to" another constituent element, it may be directly connected to, directly coupled to, or have direct access to the other constituent element. Furthermore, it may be connected to, coupled to, or have direct access to the other constituent element with an intervening constituent element in between.

In addition, in a case where one constituent element is described as being formed or arranged "on top of" or "underneath" another constituent, it may be in direct contact with the other element. Furthermore, in a case where one constituent element is described as being formed or arranged "over" or "under" another constituent, it may be formed or arranged with one or more intervening constituent elements in between. In addition, in a case where one constituent element is described as being on top of (over) or underneath (below) another element, the upward and downward directions may be defined relative to the position of one of these elements.

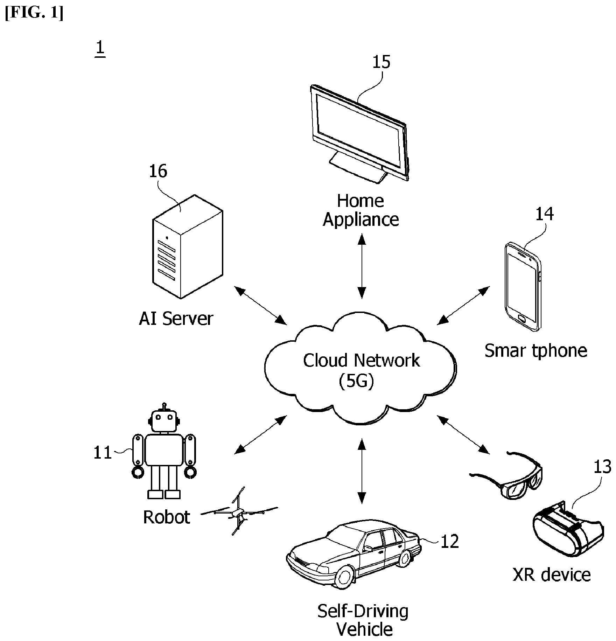

FIG. 1 is a conceptual view illustrating an embodiment of an AI apparatus.

With reference to FIG. 1, in an AI system, at least one of the following - an AI server 16, a robot 11, a self-driving vehicle 12, an XR device 13, a smartphone 14, or a home appliance 15 - is connected to a cloud network 10. At this point, the robot 11, the self-driving vehicle 12, the XR device 13, the smartphone 14, the home appliance 15, and similar apparatuses, to all of which AI technology applies, are referred to as AI apparatuses 11 to 15.

The cloud network 10 may constitute one portion of a cloud computing infrastructure or refer to a network that is present within the cloud computing infrastructure. At this point, the cloud network 10 may be configured using a 3G network, a 4G or Long Term Evolution (LTE) network, a 5G network, or a similar network.

That is, the apparatuses 11 to 16 that constitute the AI system may be connected to one another through the cloud network 10. Particularly, the apparatuses 11 to 16 may communicate with one another through a base station and also directly communicate with one another without the base station in between.

The AI server 16 may include a server that performs AI processing and a server that performs computation on big data.

The AI server 16 may be connected through the cloud network 10 to at least one of the AI apparatuses, including the robot 11, the self-driving vehicle 12, the XR device 13, the smartphone 14, and the home appliance 15, that constitute the AI system. The AI server 16 may assist the AI apparatuses 11 to 15, to which the AI server 16 is connected, in performing at least one portion of AI processing.

At this point, on behalf of the AI apparatuses (11 to 15) the AI server 16 may train an artificial intelligence network according to machine learning algorithms and directly store a learning model or transmit the learning model to the AI apparatuses 11 to 15.

At this point, the AI server 16 may receive input data from the AI apparatuses 11 to 15, deduce a resultant value for the received input data using the learning model, generate a response or control command that is based on the deduced resultant value, and transmit the generated response or control command to the AI apparatuses 11 to 15.

Alternatively, the AI apparatuses 11 to 15 may deduce a resultant value for input data using the learning model directly and also generate a response or control command that is based on the deduced resultant value.

### <AI + Robot>

The robot 11 may be implemented as a guide robot, a carrying robot, a cleaning robot, a wearable robot, an entertainment robot, a pet robot, an unmanned flying robot, or the like, to each of which AI technology applies.

The robot 11 may include a robot control module for controlling the operation thereof, and the robot control module may refer to a software module or a chip that results from implementing the software module in hardware.

Using sensor information acquired from various types of sensors, the robot 11 may acquire its status information, detect (recognize) its surrounding environment and object, generate map data, determine its movement path and driving plan, determine a response to an interaction with a user, or determine its operation.

At this point, in order to determine its movement path and driving plan, the robot 11 may use sensor information acquired from at least one sensor of the following: a LiDAR, a radar, or a camera.

The robot 11 may perform the above-described operations using a learning model configured with at least one artificial intelligence network. For example, the robot 11 may recognize its surrounding environment and object using the learning model and determine its operation using either information about its recognized surrounding environment or object information. At this point, the learning model may result either from direct learning in the robot 11 or from learning in an external apparatus, such as the AI server 16.

At this point, the robot 11 may generate a result directly using the learning model and perform its operation. However, the robot 11 may also transmit the sensor information to an external apparatus, such as the AI server 16, receive a result generated according to the sensor information, and perform its operation.

The robot 11 may determine its movement path and driving plan and control a drive unit using at least one of the following: map data, object information detected from the sensor information or object information acquired from an external apparatus. Thus, the robot 11 may drive according to its determined movement path and driving plan.

The map data may include object identification information about various objects arranged within the space into which the robot 11 moves. For example, the map data may include object identification information about fixed objects, such as a wall and a door, and movable objects, such as a flowerpot and a desk. Then, the object identification information may include an object's name, type, distance, location, and the like.

In addition, the robot 11 may control the drive unit either under the control of the user or based on the interaction with the user, and thus may perform its operation or driving. At this point, the robot 11 may acquire intent information of the interaction that interprets from the user's movement and voice utterance, determine a response based on the acquired intention information, and perform its operation.

### <AI + Self-driving >

The self-driving vehicle 12 may be implemented as a mobile robot, a vehicle, an unmanned flying object, to each of which AI technology applies.

The self-driving vehicle 12 may include a self-driving control module for controlling its self-driving function, and the self-driving control module may refer to a software module or a chip that results from implementing the software module in hardware. The self-driving control module may be included, as a component, within the self-driving vehicle 12. However, the self-driving control module may be configured as a separate hardware component and connected externally to the self-driving vehicle 12.

Using sensor information acquired from various types of sensors, the self-driving vehicle 12 may acquire its status information, detect (recognize) its surrounding environment and object, generate map data, determine its movement path and driving plan, or determine its operation.

At this point, in order to determine its movement path and driving plan, the self-driving vehicle 12, like the robot 11, may use sensor information acquired from at least one of the following: a LiDAR sensor, a radar sensor, or a camera sensor.

Particularly, the self-driving vehicle 12 may recognize an environment or an object either in an area hidden from view or in an area at a predetermined distance or longer by receiving the sensor information from external apparatuses. Alternatively, the self-driving vehicle 12 may receive directly recognized information from external apparatuses.

The self-driving vehicle 12 may perform the above-described operations using a learning model configured with at least one artificial intelligence network. For example, the self-driving vehicle 12 may recognize its surrounding environment and object using the learning model and determine its driving route using either information about its recognized surrounding environment or object information. At this point, the learning model may result either from direct learning in the self-driving vehicle 12 or from learning in an external apparatus, such as the AI server 16.

At this point, the self-driving vehicle 12 may generate a result directly using the learning model and perform its operation. However, the self-driving vehicle 12 may also transmit the sensor information to an external apparatus, such as the AI server 16, receive a result generated according to the sensor information, and perform its operation.

The self-driving vehicle 12 may determine its movement path and driving plan and control a drive unit using at least one of the following: map data, object information detected from the sensor information or object information acquired from an external apparatus. Thus, the self-driving vehicle 12 may drive according to its determined movement path and driving plan.

The map data may include object identification information about various objects arranged within the space (for example, a road) into which the self-driving vehicle 12 moves. For example, the map data may include object identification information about fixed objects, such as a streetlight, a rock, and a building, and movable objects, such as a vehicle and a pedestrian. Then, the object identification information may include an object's name, type, distance, location, and the like.

In addition, the self-driving vehicle 12 may control the drive unit either under the control of the user or based on the interaction with the user, and thus may perform its operation or driving. At this point, the self-driving vehicle 12 may acquire intent information of the interaction that interprets from the user's movement and voice utterance, determine a response based on the acquired intention information, and perform its operation.

### <AI + XR>

The XR device 13 may be implemented as a head-mount display (HMD), a head-up display (HUD) provided in a vehicle, a television, a mobile phone, a smartphone, a computer, a wearable device, a home appliance, digital signage, a vehicle, a stationary robot, a mobile robot, or the like, to each of which AI technology applies.

The XR device 13 may generate location data and attribute data on three-dimensional points by analyzing three-dimensional point cloud data or image data, which are acquired either through various sensors or from an external apparatus. Thus, the XR device 13 may acquire information about a surrounding space or a real object, render an XR object to be output, and output the XR object. For example, the XR device 13 may output an XR object, including additional information about the recognized object, in a manner that corresponds to the recognized object.

The XR device 13 may perform the above-described operations using a learning model configured with at least one artificial intelligence network. For example, the XR device 13 may recognize a real object from the three-dimensional point cloud data or the image data using the learning model and provide information corresponding to the recognized real object. At this point, the learning model may result either from direct learning in the XR device 13 or from learning in an external apparatus, such as the AI server 16.

At this point, the XR device 13 may generate a result directly using the learning model and perform its operation. However, the XR device 13 may also transmit the sensor information to an external apparatus, such as the AI server 16, receive a result generated according to the sensor information, and perform its operation.

### <AI + Robot + Self-driving >

The robot 11 may be implemented as a guide robot, a carrying robot, a cleaning robot, a wearable robot, an entertainment robot, a pet robot, an unmanned flying object, or the like, to each of which AI technology and self-driving technology apply.

The robot 11, to which AI technology and self-driving technology apply, may refer to a robot itself equipped with a self-driving function, the robot 11 that interacts with the self-driving vehicle 12, or a similar type of robot.

The robot 11 equipped with a self-driving function may collectively refer to apparatuses that either move by themselves along given routes without the control of the user or independently determine their routes and move along their determined routes.

The robot 11 and the self-driving vehicle 12, both equipped with a self-driving function, may use a common sensing method in order to determine one or more of the following: the movement path or the driving plan. For example, the robot 11 and the self-driving vehicle 12, both equipped with a self-driving function, may determine at least one of the following - the movement path or the driving plan - using information sensed through a LiDAR, a radar, and a camera.

The robot 11, which interacts with the self-driving vehicle 12, may be present separately from the self-driving vehicle 12 and either operate in conjunction with the self-driving function inside or outside the self-driving vehicle 12 or perform an operation in conjunction with the user riding in the self-driving vehicle 12.

At this point, the robot 11, which interacts with the self-driving vehicle 12, may acquire the sensor information on behalf of the self-driving vehicle 12 and provide the acquired sensor information to the self-driving vehicle 12. Alternatively, the robot 11 may acquire the sensor information, generate either information on the surrounding environment or object information, and provide the generated information to the self-driving vehicle 12. Thus, the robot 11 may assist the self-driving vehicle 12 in performing its self-driving function.

Alternatively, the robot 11, which interacts with the self-driving vehicle 12, may either monitor the user riding in the self-driving vehicle 12 or control functions of the self-driving vehicle 12 through the interaction with the user. For example, in a case where it is determined that the driver is drowsy, the robot 11 may either activate the self-driving function of the self-driving vehicle 12 or assist the self-driving vehicle 12 in controlling the drive unit. At this point, the functions of the self-driving vehicle 12, which are controlled by the robot 11, may include not only a self-driving function, but also a function provided in either a navigation system or an audio system provided inside the self-driving vehicle 12.

Alternatively, the robot 11, which interacts with the self-driving vehicle 12, may either provide information to the self-driving vehicle 12 from outside the self-driving vehicle 12, or assist the self-driving vehicle 12 in performing its functions. For example, the robot 11, like smart traffic signals, may also provide traffic information, including signal information or similar information, to the self-driving vehicle 12. Furthermore, the robot 11, like an automatic electric charging station for electric vehicles, may also connect an electric charger to a charging inlet by interacting with the self-driving vehicle 12.

### <AI + Robot + XR>

The robot 11 may be implemented as a guide robot, a carrying robot, a cleaning robot, a wearable robot, an entertainment robot, a pet robot, an unmanned flying robot, a drone, or the like, to each of which AI technology and XR technology apply.

The robot 11, to which XR technology applies, may refer to a robot that is subject to control or interaction within an XR image. In this case, the robot 11 is distinguished from the XR device 13 and may operate in conjunction with the XR device 13.

When the robot 11, which is subject to control or interaction within an XR image, obtains sensor information from sensors including a camera, the robot 11 or the XR device 13 may generate an XR image based on the sensor information, and the XR device 13 may output the generated XR image. Then, the robot 11 may operate based on either a control signal input through the XR device 13 or the interaction with the user.

For example, the user may remotely check an XR image corresponding to a point in time for the robot 11, which operates in conjunction with an external device, through the external device, such as the XR device 13. Furthermore, through the interaction, the user may adjust a self-driving path for the robot 11, control the operation or driving of the robot 11, or check information about a nearby object.

### <AI + Self-driving + XR>

The self-driving vehicle 12 may be implemented as a mobile robot, a vehicle, an unmanned flying object, or the like, to each of which AI technology and XR technology apply.

The self-driving vehicle 12, to which XR technology applies, may refer to a self-driving vehicle that includes a means of providing an XR image, a self-driving vehicle that is subject to control or interaction within an XR image, or a similar type of vehicle. Particularly, the self-driving vehicle 12, which is subject to control or interaction within an XR image, is distinguished from the XR device 13 and may operate in conjunction with the XR device 13.

The self-driving vehicle 12, which includes a means of providing an XR image, may acquire sensor information from sensors including a camera and output an XR image generated based on the acquired sensor information. For example, the self-driving vehicle 12 may include a HUD and output an XR image. Thus, the self-driving vehicle 12 may provide an XR object, corresponding to either a real object or an object within a screen, to an occupant.

At this point, in a case where an XR object is output on the HUD, at least one portion of the XR object may be output in such a manner as to overlap with the real object on which the occupant keeps his/her gaze. In contrast, in a case where an XR object is output on a display provided inside the self-driving vehicle 12, at least one portion of the XR object may be output in such a manner as to overlap with an object within a screen. For example, the self-driving vehicle 12 may output XR objects that correspond to objects such as a vehicle road, another vehicle, traffic signals, traffic signs, a two-wheel vehicle, a pedestrian, and a building.

When the self-driving vehicle 12, which is subject to control or interaction within an XR image, obtains sensor information from sensors including a camera, the self-driving vehicle 12 or the XR device 13 may generate an XR image based on the sensor information, and the XR device 13 may output the generated XR image. Then, the self-driving vehicle 12 may operate based on either a control signal input through an external device, such as the XR device 13, or the interaction with the user.

### [Extended Reality Technology]

Extended reality (XR) collectively refers to virtual reality (VR), augmented reality (AR), and mixed reality (MR). Virtual technology provides objects or backgrounds in the real world as CG images only. AR technology additionally provides a CG image virtually generated onto an actual object image. MR technology is a computer graphic technology that presents virtual objects in a manner that is seamlessly integrated into the real world.

MR technology presents a real object and a virtual object together. In this respect, MR technology is similar to AR technology. However, AR technology is used in such a manner as to supplement a real object with a virtual object. In contrast, MR technology is used in such a manner that a virtual object and a real object coexist and interact as equals. In this respect, AR technology differs from MR technology.

XR technology may apply to a head-mount display (HMD), a head-up display (HUD), a mobile phone, a tablet PC, a laptop computer, a desktop computer, a TV, digital signage, and the like. A device to which XR technology applies may be referred to as an XR device.

An electronic device according to an embodiment of the present invention, which provides extended reality, is described below. Particularly, an optical device that finds application in augmented reality and an electronic device including the optical device are described in detail.

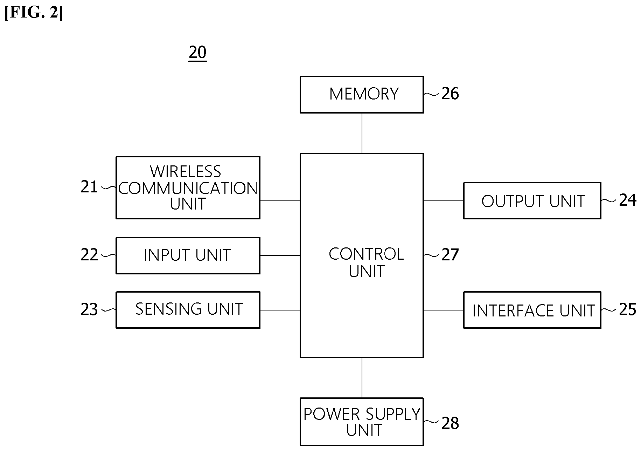

FIG. 2 is a block diagram illustrating the configuration of an extended reality electronic device 20 according to an embodiment of the present invention.

With reference to FIG. 2, the extended reality electronic device 20 may include a wireless communication unit 21, an input unit 22, a sensing unit 23, an output unit 24, an interface unit 25, a memory 26, a control unit 27, a power supply unit 28, and other similar units. Constituent elements illustrated in FIG. 2 are not essential for implementing the electronic device 20. The electronic device 20 described in the present specification may have more or fewer constituent elements than those enumerated above.

More specifically, among the constituent elements enumerated above, the wireless communication unit 21 may include one or more modules that enable wireless communication between the electronic device 20 and a wireless communication system, between the electronic device 20 and another electronic device, or between the electronic device 20 and an external server. In addition, the wireless communication unit 21 may include one or more modules that connect the electronic device 20 to one or more networks.

The wireless communication unit 21 may include at least one of the following: a broadcast reception module, a mobile communication module, a wireless Internet module, a short-range communication module, or a location information module.

The input unit 22 may include a camera or image input unit for inputting an image signal, a microphone or audio input unit for inputting an audio signal, and a user input unit (for example, a touch key, a push key (mechanical key), and the like) for receiving information, as an input, from a user. Voice data or image data that are collected by the input unit 22 may be analyzed and be processed as the user's control command.

The sensing unit 23 may include at least one sensor in order to sense at least one of the following: internal information of the electronic device 20, information about the surrounding environment of the electronic device 20, or user information.

For example, the sensing unit 23 may include at least one of the following: a proximity sensor, an illumination sensor, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (for example, an image capture means), a microphone, a battery gauge, an environment sensor (for example, a barometer, a hygrometer, a thermometer, a radiation detection sensor, a thermal sensor, a gas sensor, or the like), or a chemical sensor (for example, an electronic nose, a health care sensor, a biometric sensor, or the like). The electronic device 20 disclosed in the present disclosure may utilize, in combination, information pieces sensed by at least two of these sensors.

The output unit 24 serves to generate an output associated with a sense of sight, a sense of hearing, or a sense of touch, and may include at least one of the following: a display unit, a sound output unit, a haptic module, or a light output unit. The display unit is configured to be structurally layered with a touch sensor or is integrally formed with the touch sensor, thereby being implemented as a touch screen. This touch screen may function as a user input means that provides an input interface between an augmented reality electronic device 20 and the user and, at the same time, may provide an output interface between the augmented reality electronic device 20 and the user.

The interface unit 25 may serve as a path to various types of external apparatuses that are connected to the electronic device 20. The electronic device 20 may be provided with virtual reality or augmented reality content from an external apparatus through the interface unit 25 and perform mutual interaction by exchanging various input signals, sensing signals, and data with the external apparatus.

For example, the interface unit 25 may include at least one of the following: a wired or wireless headset port, an external charger port, a wired or wireless data port, a memory card port, a port for connecting to an apparatus including an identification module, an audio input/output (I/O) port, a video input/output (I/O) port, or an earphone port.

In addition, data for supporting various functions of the electronic device 20 are stored in the memory 26. A multiplicity of application programs (or programs) that are executed on the electronic device 20, data for operating the electronic device 20, and commands may be stored in the memory 26. At least one or several of these application programs may be downloaded from an external server through wireless communication. At least one or several of these application programs may be pre-installed on the electronic device 20 before shipping from the factory to perform basic functions (for example, receiving a call, placing a call, receiving a message, and sending a message) of the electronic device 20.

The control unit 27 normally controls the overall operation of the electronic device 20 in addition to operations associated with the application programs. The control unit 27 may process signals, data, information, and the like that are input or output through the constituent elements described above.

In addition, the control unit 27 may control at least one or several of the constituent elements by executing the application programs stored in the memory 26. Thus, the control unit 27 may either provide appropriate information to the user or perform a function. Moreover, the control unit 27 may operate, in combination, at least two of the constituent elements included in the electronic device 20 in order to execute the application program.

In addition, the control unit 27 may detect the movement of the electronic device 20 or the user's movement using a gyroscope sensor, a gravity sensor, a motion sensor, and other sensors, which are included in the sensing unit 23. Alternatively, the control unit 27 may also detect an object approaching the vicinity of either the electronic device 20 or the user using a proximity sensor, an illumination sensor, a magnetic sensor, an infrared (IR) sensor, an ultrasonic sensor, an optical sensor, and other sensors, which are included in the sensing unit 23. Additionally, the control unit 27 may also detect the user's movement through sensors provided in a controller that operates in conjunction with the electronic device 20.

In addition, the control unit 27 may perform the operation (or function) of the electronic device 20 using the application program stored in the memory 26.

Under the control of the control unit 27, external or internal electric power is supplied to the power supply unit 28, which then distributes the internal or external electric power to each of the constituent elements included in the electronic device 20. The power supply unit 28 may include a battery, and the battery may be provided in a built-in or replaceable form.

At least two or several of the constituent elements may operate in cooperation with each other in order to operate or control the electronic device according to various embodiments described above or to implement a method of controlling the electronic device. In addition, the operation or control of the electronic device or the method of controlling the electronic device may be implemented on the electronic device by executing at least one application program stored in the memory 26.

The electronic device according to the present invention is described below, taking as an example an embodiment that finds application in head-mounted displays (HMD). However, embodiments of the electronic device according to the present invention may include a mobile phone, a smartphone, a laptop computer, a digital broadcast-dedicated terminal, a personal digital assistant (PDA), a portable multimedia player (PMP), a navigation system, a slate PC, a tablet PC, an ultrabook computer, a wearable device and the like. In addition to an HMD, wearable devices may include a watch-type terminal (smartwatch), contact lens, VR/AR/MR glasses, and the like.

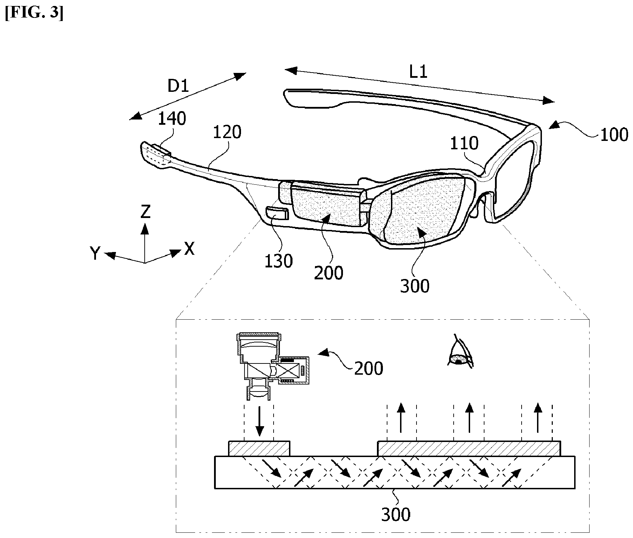

FIG. 3 is a perspective view illustrating an augmented reality electronic device according to an embodiment of the present invention.

As illustrated in FIG. 3, the electronic device according to the embodiment of the present invention may include a frame 100, an optical device 200, and a display unit 300.

The electronic device may be provided in the form of smart glasses. The electronic device in the form of smart glasses may be configured to be wearable on the human head and may include a frame (casing, housing, or the like) 100 for this purpose. The frame 100 may be formed of flexible material in such a manner as to be easy to wear.

The frame 100 is supported on the human head and provides a space for mounting various types of components. As illustrated, electronic components, such as the optical device 200, a user input unit 130, or a sound output unit 140, may be mounted on the frame 100. In addition, a lens that is positioned in front of at least one of the user's left and right eyes may be removably attached to the frame 100.

The frame 100, as illustrated in the drawing, may have the form of glasses worn on the user's face, but is not necessarily limited thereto. The frame 100 may also have the form of a goggle or a similar configuration tightly worn on the user's face.

The frame 100 may include a front frame 110 including at least one opening portion and a pair of lateral frames 120 that extend in parallel with each other in the y direction (in FIG. 3) intersecting the front frame 110.

The frame 100 may have a length DI in the x direction and a length LI in the y direction that are the same or different from each other.

The optical device 200 is configured to control various types of electronic components provided in the electronic device.

The optical device 200 may generate an image or a sequence of images that are visible to the user. The optical device 200 may include an image source panel, a plurality of lenses, and the like. The image source panel generates an image. The plurality of lenses diffuse or converge light generated in the image source panel.

The optical device 200 may be fixed to any lateral frame 120 of the pair of lateral frames 120. For example, the optical device 200 is fixed on the inside or outside of any lateral frame 120 or may be integrally formed in a manner that is built into the lateral frame 120. Alternatively, the optical device 200 may be fixed to the front frame 110 or may also be provided separately from the electronic device.

The display unit 300 may be implemented in the form of a head-mounted display (HMD). The form of an HMD refers to a display technique that makes an image visible directly in front of the user's eyes. The display unit 300 may be arranged in a manner that corresponds to at least one of the user's left and right eyes, so that, when the user wears the electronic device, an image is provided directly in front of the user's eyes. The present drawing illustrates that the display unit 300 is positioned in a portion that corresponds to the user's right eye, so that an image is output toward the user's right eye. However, the display unit 300 is not limited to the portion as described above. The display units 300 may also be arranged in portions that correspond to the user's right and left eyes, respectively.

The display unit 300 may be configured in such a manner that the user visually recognizes the surrounding environment and that, at the same time, an image generated by the optical image 200 is visible to the user. For example, the display unit 300 may project an image onto a display region using a prism.

Moreover, the display unit 300 may be formed of transparent material so that the projected image and the natural field of vision in the forward direction (a range of the user's visual perception) are visible at the same time. For example, the display unit 300 may be semitransparent and formed of optical members, including glasses.

Then, the display unit 300 may be fixed to the front frame 110 by being inserted into the opening portion included therein. Alternatively, the display unit 300 may be fixed to the front frame 110 by being positioned on the rear surface (that is, between the opening portion and the user) of the opening portion. The drawing illustrates, as an example, the case where the display unit 300 is positioned on the rear surface of the opening portion, thereby being fixed to the front frame 110. Otherwise, the display unit 300 may be arranged and fixed at various positions on the frame 100.

As illustrated in FIG. 3, in the electronic device, when the optical device 200 directs image light for an image toward one side of the display unit 300, the image light is emitted to the other side through the display unit 300. Thus, the image generated by the optical device 200 may be visible to the user.

Accordingly, the user can look at the external environment through the opening portion in the frame 100 and, at the same time, view the image generated by the optical device 200. That is, the image output through the display unit 300 can be viewed in a manner that overlaps with the natural field of vision. The electronic device may provide augmented reality (AR) that superimposes a virtual image onto a real image or background using these display characteristics and displays the result of the superimposition as one image.

Moreover, in addition to performing this driving operation, the electronic device may provide the external environment and the image generated by the optical device 200 to the user with a time lag for a brief period that is imperceptible to the human. For example, in one section of one frame, the external environment is provided to the user, and in the other section, an image from the optical device 200 may be provided to the user.

Alternatively, both overlapping and time lag may also be provided.

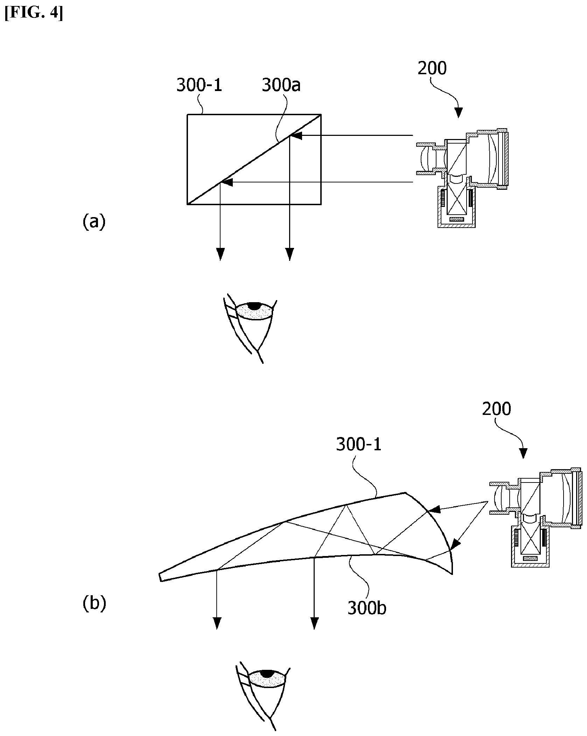

FIGS. 4 to 6 are conceptual views that are referenced to describe various display techniques that are applicable to a display unit according to an embodiment of the present invention.

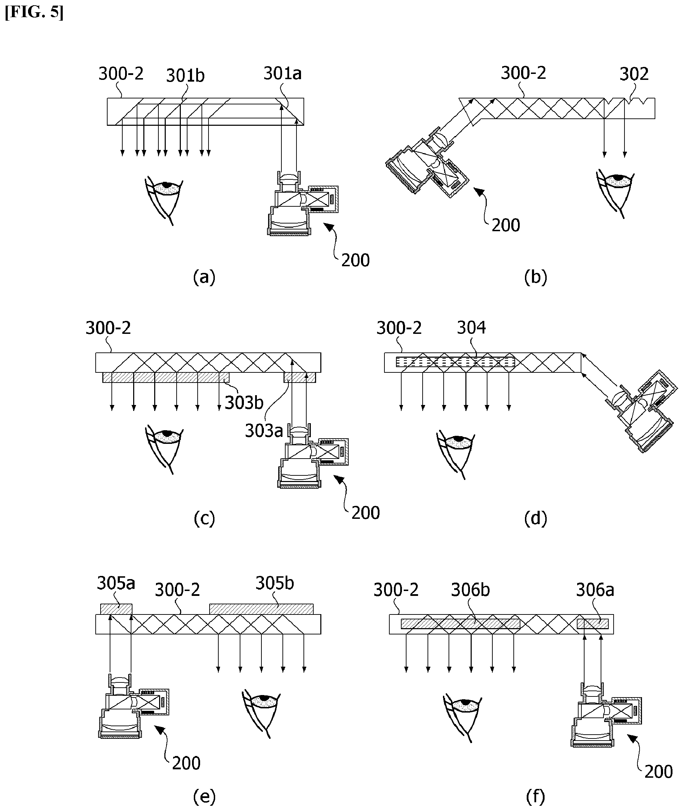

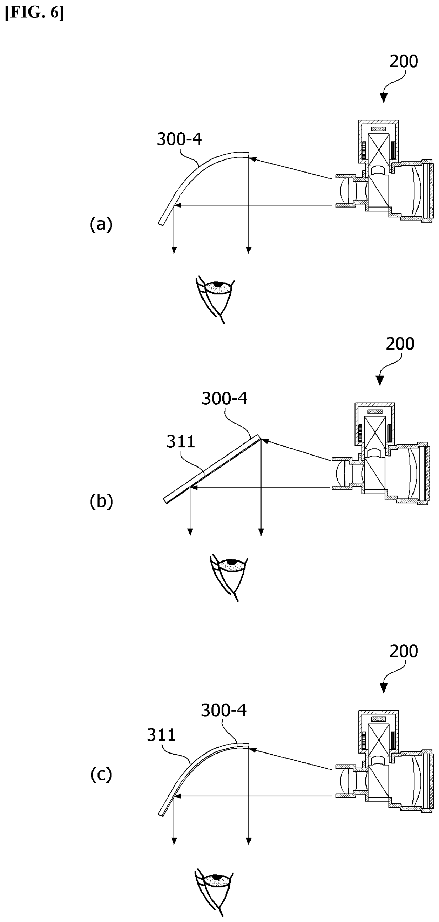

Specifically, FIG. 4 is a view that is referenced to describe an embodiment of an optical member that uses a prism technique. FIG. 5 is a view that is referenced to describe an embodiment of an optical member that uses a waveguide technique. FIG. 6 is a view that is referenced to an embodiment of an optical member that uses a surface reflection technique.

As illustrated in FIG. 4, the optical member that uses the prism technique may be used in a display unit 300-1 according to an embodiment of the present invention.

As an embodiment of the optical member that uses the prism technique, as illustrated in FIG. 4(a), a flat-type glass optical member, which has a flat surface on which image light is incident and a flat surface 300a from which the image light is emitted, may be used. Alternatively, as illustrated in FIG. 4(b), a free-form glass optical member, which has a surface 300b from which image light is emitted, may be used, with the surface 300b being formed as a curved surface that does not have a constant curvature radius.

The image light generated by the optical device 200 may be incident on a flat lateral surface of the flat-type glass optical member, be reflected by a total-reflection mirror 300a provided inside the flat-type glass optical member, and be emitted toward the user. At this point, the total-reflection mirror 300a to be provided inside the flat-type glass optical member may be formed inside the flat-type glass optical member using a laser.

The free-form glass optical member may be configured in such a manner that the thickness thereof decreases in the direction opposite the surface on which the image light is incident. Thus, the image light generated by the optical device 200 may be incident on the curved lateral surface of the free-form glass optical member, be totally reflected inside the free-form glass optical member, and be emitted toward the user.

As illustrated in FIG. 5, the optical member that uses the waveguide technique or a light guide optical element (LOE) may be used in a display unit 300-2 according to another embodiment of the present invention.

As embodiments of the optical member that uses the waveguide or light guide technique, there may be provided a glass optical member that uses a segmented beam splitter technique as illustrated in FIG. 5(a), a glass optical member that uses a sawtooth prism technique as illustrated in FIG. 5(b), a glass optical member that uses a diffractive optical element (DOE) as illustrated in FIG. 5(c), a glass optical member that has a hologram optical element (HOE) as illustrated in FIG. 5(d), a glass optical member that has a passive grating as illustrated in FIG. 5(e), and a glass optical member that has an active grating as illustrated in FIG. 5(f).

As illustrated, the glass optical member that uses the segmented beam splitter technique, as illustrated in FIG. 5(a), may include a total-reflection mirror 301a and a segmented beam splitter 301b. The total-reflection mirror 301a is positioned, in the direction in which an optical image is incident, within the glass optical member. The segmented beam splitter 301b is positioned, in the direction in which the optical image is emitted, within the glass optical member.

Accordingly, the optical image generated by the optical device 200 is totally reflected from the total-reflection mirror 301a inside the glass optical member. The totally reflected optical image is then partially separated and emitted by the segmented beam splitter 301b while being light-guided along the lengthwise direction of the glass, thereby being visually recognized by the user.

In the glass optical member that uses the sawtooth prism technique, as illustrated in FIG. 5(b), the image light from the optical device 200 is incident in an inclined direction on a lateral surface of the glass, is totally reflected inside the glass, and is emitted out of the glass by a sawtooth-shaped raised or grooved section 302 provided in the direction in which the optical image is emitted, thereby being visually recognized by the user.

The glass optical member that has the diffractive optical element (DOE), as illustrated in FIG. 5(c), includes a first diffraction portion 303a and a second diffraction portion 303b. The first diffraction portion is positioned on the surface, in the direction in which the optical image is incident, of the glass optical member. The second diffraction portion is positioned on the surface, in the direction in which the optical image is emitted, of the glass optical member. The first and second refraction portions 303a and 303b may be provided in a form that allows a specific pattern to be formed on the surface of the glass or that allows a separate diffractive film to be attached to the surface of the glass.

Accordingly, the optical image generated by the optical device 200 may be diffracted while being incident through the first diffraction portion 303a and be light-guided along the lengthwise direction of the glass while being totally reflected. Then, the optical image is emitted through the second diffraction portion 303b, thereby being visually recognized by the user.

The glass optical member that has the hologram optical element (HOE), as illustrated in FIG. 5(d), may include an out-coupler 304. The out-coupler 304 is positioned, in the direction in which the optical image is emitted, within the glass. Accordingly, the optical image may enter in an inclined direction from the optical device 200 through the lateral surface of the glass, be totally reflected, be light-guided along the lengthwise direction of the glass, and be output by the out-coupler 304, thereby being visually recognized by the user. The structure of the hologram optical element gradually changes and thus may be subdivided into a structure with a passive grating and a structure with an active grating.

The glass optical member that has the passive grating, as illustrated in FIG. 5(e) may include an in-coupler 305a and an out-coupler 305b. The in-coupler 305a is positioned on the surface opposite the surface, in the direction in which the optical image is incident, of the glass. The out-coupler 305b is positioned on the surface opposite the surface, in the direction in which the optical image is emitted, of the glass. At this point, the in-coupler 305a and the out-coupler 305b may be provided in the form of a film having a passive grating.

Accordingly, the optical image incident on the glass surface, in the incident direction, of the glass may be totally reflected by the in-couple 305a positioned on the opposite surface, be light-guided along the lengthwise direction of the glass, and be emitted by the out-coupler 305b through the opposite surface of the glass, thereby being visually recognized by the user.

The glass optical member that has the active grating, as illustrated in FIG. 5(f), may include an in-coupler 306a and an out-coupler 306b. The in-coupler 306a is formed, in the form of the active grating, in the direction in which the optical image is incident, within the glass. The out-coupler 306b is formed, in the form of the active grating, in the direction in which the optical image is emitted, within the glass.

Accordingly, the optical image incident on the glass may be totally reflected by the in-coupler 306a, be light-guided along the lengthwise direction of the glass, and be emitted out of the glass by the out-coupler 306b, thereby being visually recognized by the user.

As a display unit according to a modification example, an optical member that uses a pin mirror technique may be used.

In addition, in order to serve as a coupler, the optical member that uses a surface reflection technique employing a free-form combiner technique, as illustrated in FIG. 6(a), may have a plurality of flat surfaces, each with a different incident angle for the optical image, which are formed as a single glass pane. Consequently, a free-form combiner glass pane formed to have an overall curved surface may be used. The optical image may be incident on the free-form combiner glass 300 in such a manner that the incident angle varies on a per-region basis, thereby being emitted to the user.

The optical member that uses the surface reflection technique employing a flat HOE technique, as illustrated in FIG. 6(b) may include a hologram optical element (HOE) 311, which is coated or patterned on the flat surface of the glass. The optical image incident on the optical device 200 may pass through the hologram optical element 311, be reflected from the surface of the glass, and pass back through the hologram optical element 311, thereby being output toward the user.

The optical member that uses the surface reflection technique employing the free-form HOE technique, as illustrated in FIG. 6(c), may include a hologram optical element 313, which is coated or patterned on the surface of the glass in a free form. The operation principle behind the optical member is the same as described with reference to FIG. 6(b).

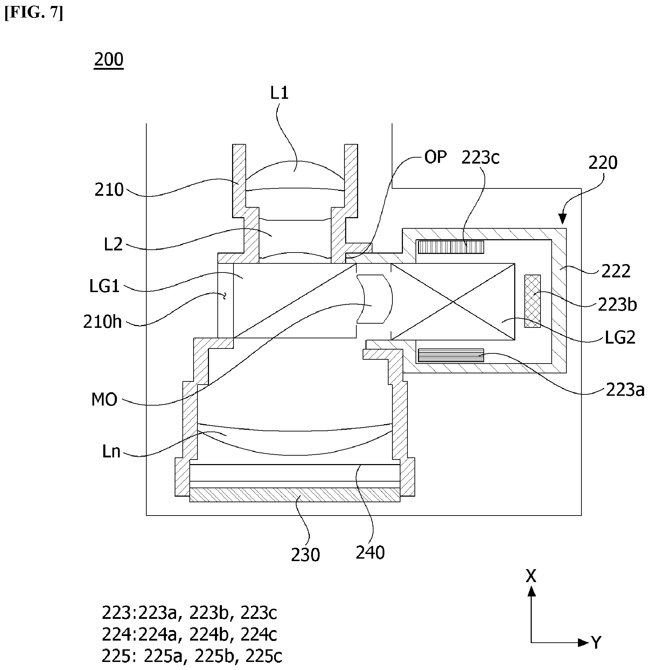

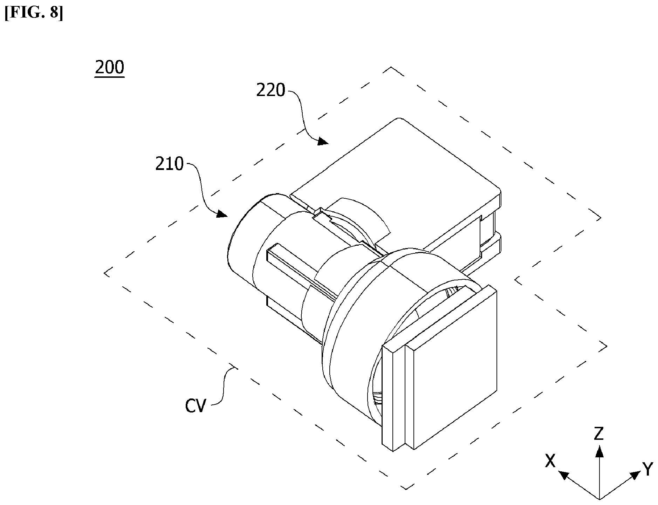

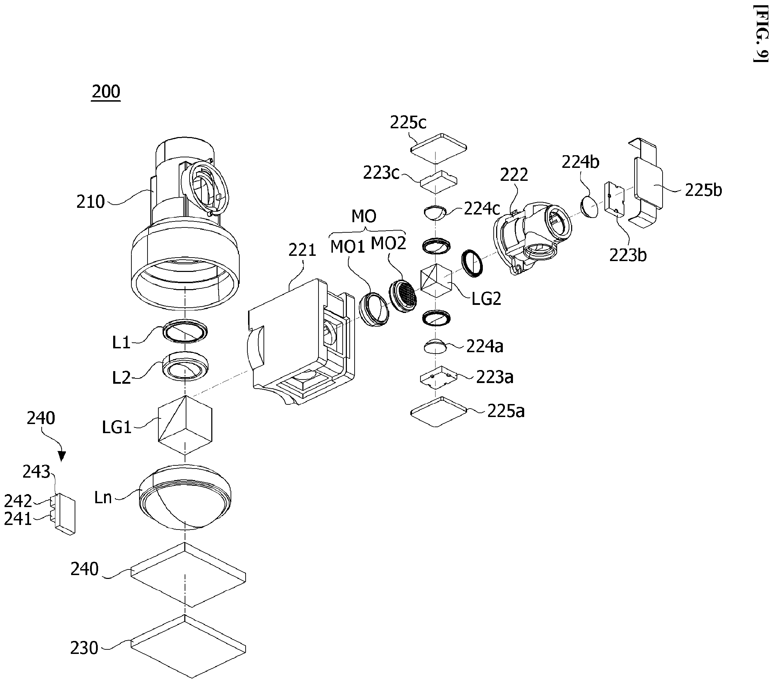

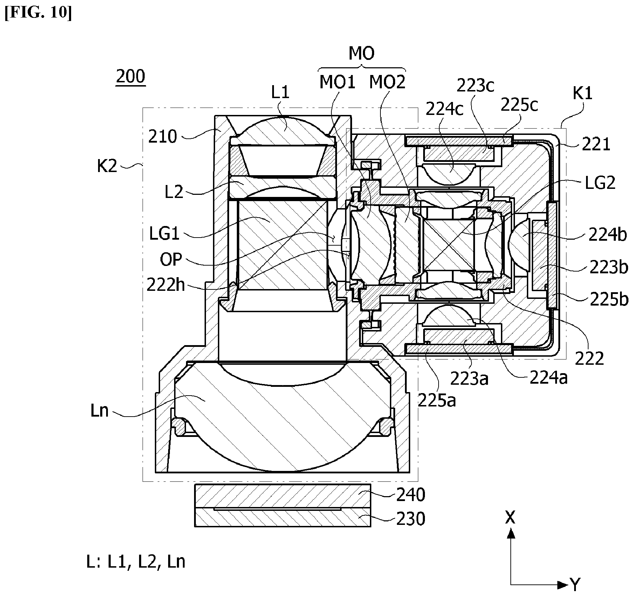

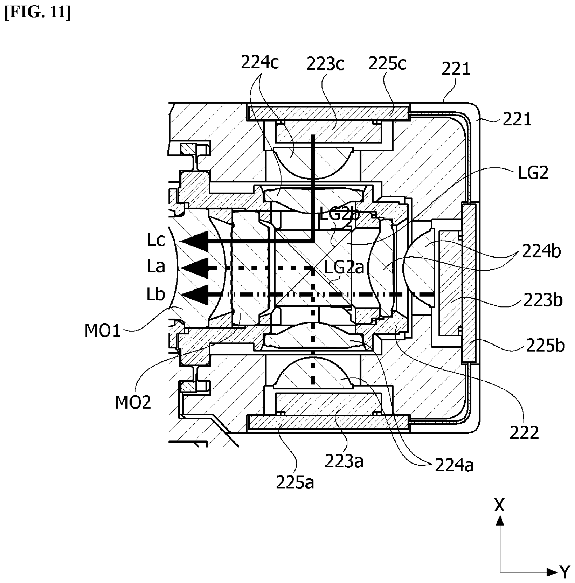

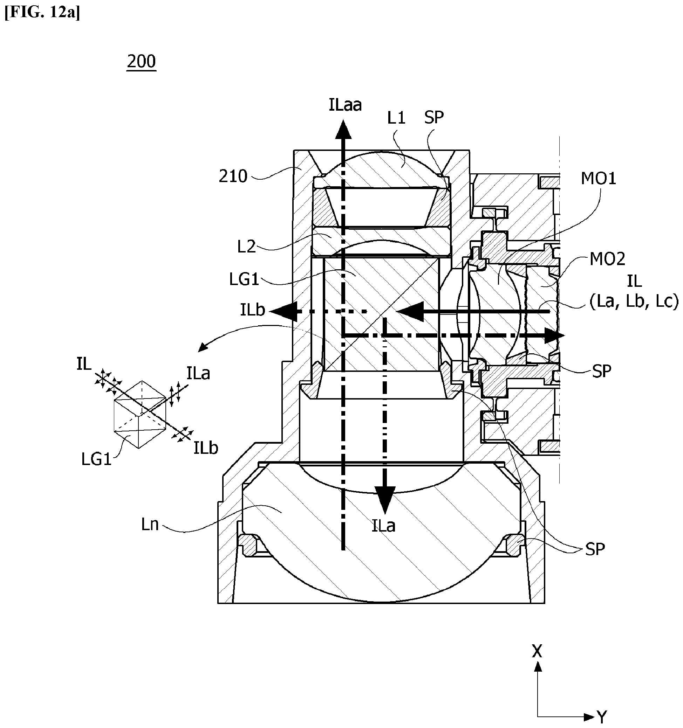

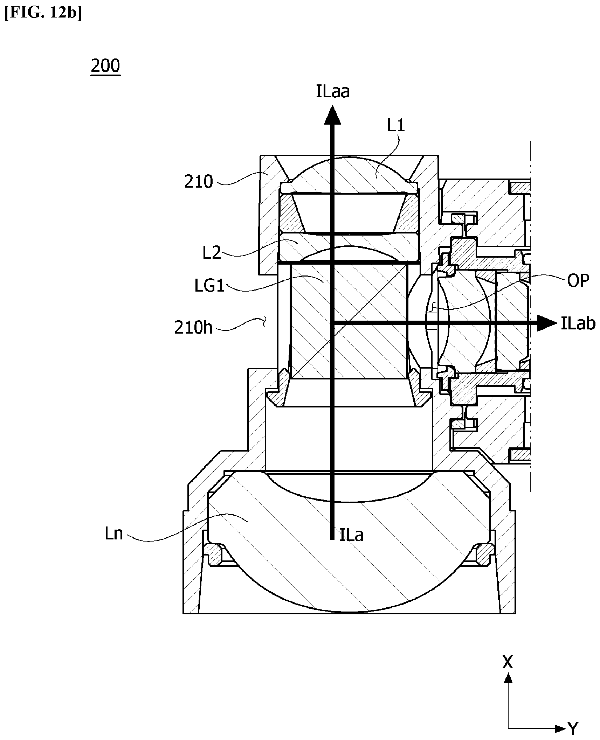

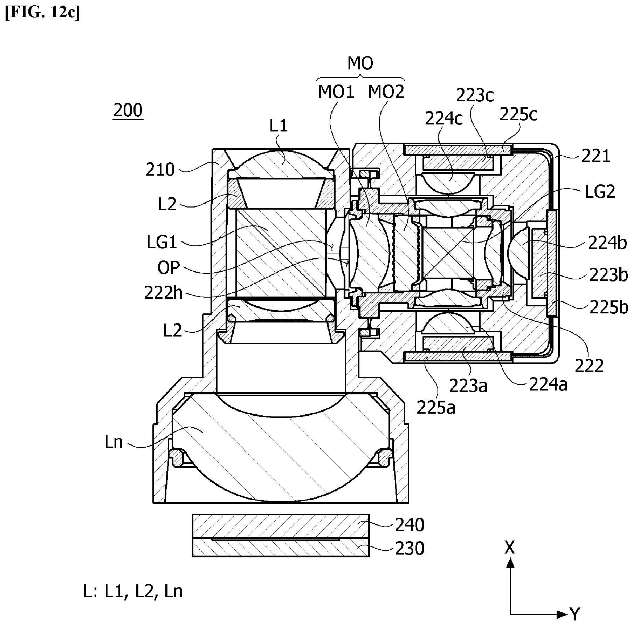

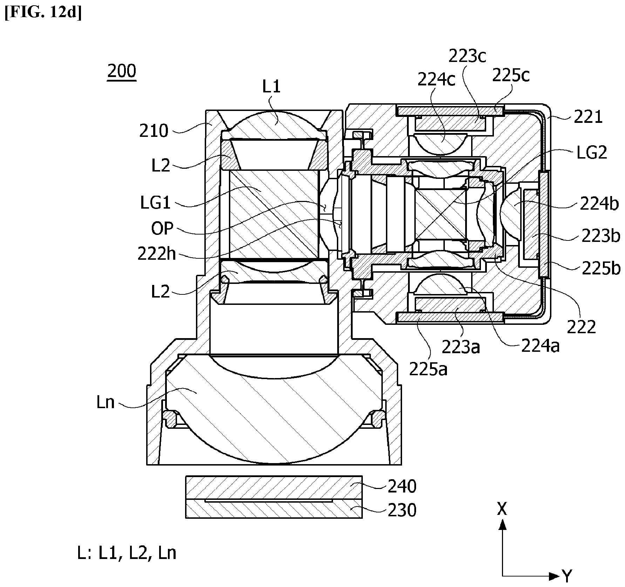

FIG. 7 is a conceptual view illustrating an optical device according to a first embodiment. FIG. 8 is a perspective view illustrating the optical device according to the first embodiment. FIG. 9 is an exploded perspective view illustrating the optical device according to the first embodiment. FIG. 10 a cross-sectional view taken along line A-A' on FIG. 8. FIG. 11 is an enlarged cross-sectional view illustrating Portion K1 of FIG. 10. FIG. 12a is an enlarged cross-sectional view illustrating Portion K2 of FIG. 10. FIG. 12b is a cross-sectional view illustrating a modification example of Portion K2 of FIG. 12a. FIG. 12c is a cross-sectional view illustrating another modification example of Portion K2 of FIG. 12a. FIG. 12d is a cross-sectional view illustrating still another modification example of Portion K2 of FIG. 12a.

With reference to FIGS. 7 to 10, the optical device 200 according to the first embodiment includes a barrel 210, a lens L, and a first light guide LG1. Moreover, the optical device 200 may include a light source device 220 that is positioned in or coupled to an opening portion OP formed in a lateral surface of the barrel 210, and a light signal generation unit 230 adjacent to the barrel 210. Moreover, the optical device 200 may further include a cover CV, which covers the barrel 210, the light source device 220, and the light signal generation unit 230, and a substrate (not illustrated) that includes a connector.

A plurality of the lenses L may be provided. For example, the lenses L may include a plurality of lenses arranged sequentially from the top of the barrel 210. For example, the lenses L may include a first lens L1, which is arranged at the uppermost position, a second lens L2, which is arranged underneath the first lens L1, and so forth up to an N-th lens Ln, which is arranged at the lowermost position. At this point, N may be a natural number that is greater than or equal to 2. Among the plurality of lenses L, the N-th lens Ln may be positioned most adjacent to the light signal generation unit 230, which is positioned under the lower end of the barrel 210 or under the lowermost lens of the plurality of lenses L.

In addition, in an embodiment of the present invention, a first direction (the X-axis direction) may correspond to an optical axis. In addition, the first direction (the X-axis direction) may correspond to a direction in which light that is emitted from the light source device 220 and reflected from the light signal generation unit 230 is emitted to the above-described display unit. A second direction (the Y-axis direction) is a direction perpendicular to the first direction (the X-axis direction). Moreover, the second direction (the Y-axis direction) may correspond to the direction from the first light guide LG1 toward the opening portion OP. In addition, hereinafter in the present specification, or in the present embodiment, the second direction (the Y-axis direction) may correspond to the direction from the first light guide LG1 toward a second light guide LG2. The first light guide LG1 may be referred to as a first light guide unit or a first guide member. In addition, the second light guide LG2 may be referred to as a second light guide unit or a second guide member.

The barrel 210 may further have a hole corresponding to the opening portion OP. As an embodiment, the barrel 210 may have a barrel hole or an additional hole 210h. The additional hole 210h may be positioned in a manner that faces the opening portion OP. Alternatively, the additional hole 210h may overlap with the opening portion OP in the second direction (the Y-axis direction). Alternatively, the distance in the first direction from the N-th lens Ln to the additional hole 210h may be the same as the distance between the opening portion OP and the N-th lens Ln. Alternatively, the additional hole 210h may be positioned in a region, corresponding to the position of the opening portion OP, of the internal surface of the barrel 210. With this configuration, a bonding member may be applied to the light source device 220, which is coupled to (inserted into, fixed to, or connected to) the opening portion OP through the additional hole 210h. Accordingly, the binding force between the barrel 210 and the light source device 220 may be enhanced. Therefore, the optical device 200 according to the embodiment may have improved durability, endurance, or reliability. Alternatively, optical tests may also be easily performed on the light source device 220, positioned in the opening portion OP, through the additional hole 210h. Alternatively, fluid (for example, air) discharge or dispensing through the additional hole 210h may be easily performed on the barrel 210 and the light source device 200. The presence or absence of the additional hole 210h may apply in a manner that varies according to an embodiment. For example, the additional hole 210h, as described above, may be arranged in the lateral surface of the barrel 210. Alternatively, the additional hole 210h may not be present on the lateral surface of the barrel 210, considering durability or similar factors.

A plurality of lenses L may be positioned within the barrel 210. In addition, the first light guide LG1 may be positioned within the barrel 210.

A barrel 210 according to an embodiment may include the opening portion OP formed in the lateral surface thereof. The opening portion OP may have various shapes, such as a circle and a polygon. The opening portion OP may correspond to the position of the first light guide LG1.

As an embodiment, the opening portion OP may overlap with the first light guide LG1 in the direction perpendicular to the optical axis. With this configuration, light emitted from the light source device 220 positioned on a lateral portion of the barrel 210 may be easily incident on the first light guide LG1.

The first light guide LG1 may be arranged between two lenses of a plurality of lenses. For example, the first light guide LG1 may be arranged between the first lens L1 and the N-th lens Ln. In addition, the first light guide LG1 may be arranged between the first lens L1 and the light signal generation unit 230. In addition, the first light guide LG1 may be arranged between the first lens L1 and the second lens L2 or between the second lens L2 and the N-th lens Ln. In various embodiments, these various positions of the first light guide LG1 are described below.

In the present embodiment, the first light guide LG1 may be positioned between the second lens L2 and the N-th lens Ln. Accordingly, the N-th lens Ln may be arranged between the first light guide LG1 and the light signal generation unit 230. With this configuration, light reflected from the first light guide LG1 may be provided to the light signal generation unit 230, thereby securing a suitable light path. In addition, refraction of the reflected light may be achieved. Accordingly, minimization of the first light guide LG1 may be achieved.

The first light guide LG1 may include a first prism. The first prism may be a polarizing prism. In addition, the first prism may be a polarized separation prism.

The first light guide LG1 (or the first prism) reflects first polarized light and transmits second polarized light. For example, a portion (the first polarized light) of light emitted from the light source device 220 or incident on the first light guide LG1 may be reflected from the first light guide LG1 and be provided to the light signal generation unit 230. Then, another portion (the second polarized light) of the light incident on the first light guide LG1 may pass through the first light guide LG1 and be absorbed in the barrel 210.

The light emitted from the light source device 220 through the opening portion OP may be incident on the first light guide LG1. To this end, as described above, the opening portion OP may be arranged in a region on which the first light guide LG1 is positioned. For example, the incident surface of the first light guide LG1 may be positioned in a manner that faces the opening portion OP. Alternatively, the position of the first light guide LG1 in the barrel 210 may correspond to the opening portion OP or the light source device. The light source device 220 may include a light source 223 and thus generate (produce or provide) or emit light. A light source device 220 according to an embodiment may be positioned in or coupled to the opening portion OP. That is, the light source device 220 may be connected or coupled to the barrel 210.

The light source device 220 may include a housing 222 having an opening 222h, the second light guide LG2 arranged within the housing 2220, and the light source 223 that provides light to the second light guide LG2.

Moreover, the light source device 220 may include a light source assembly 221 that is arranged at the outermost location within the light source device 220 and surrounds the housing 222, a light source lens 224 adjacent to the light source 223, and a medium lens MO positioned within the housing 222.

The light source assembly 221 may be arranged farthest from the light source device 220. In a case where the light source 223 is difficult to mount within the housing 222 or where it is necessary to mount an additional lens (a light source lens), the light source assembly 221 may be positioned outside the housing 222. The light source assembly 221 may have a structure that is integrally formed with the housing 222 or separated from the housing 222.

The housing 222 may have the opening 222h. The housing 222 may be positioned adjacent to the opening portion OP in the barrel 210. For example, the opening 222h in the housing 222 may be positioned in a manner that corresponds to the opening portion OP in the barrel 210. Accordingly, the opening 222h in the housing 222 may overlap with the opening portion OP in the barrel 210 in the second direction (the Y-axis direction).

The light source 223 may be positioned within the housing 222 or the light source assembly 221. The light source 223 may emit light. For example, light from the light source 223 may be incident on the second light guide LG2 within the housing 222. The second light guide LG2 may be positioned within the housing 222. Accordingly, the second light guide LG2 may transfer light emitted from the light source 223 to the opening 222h or the first light guide LG1.

One or more light sources 223 may be provided. A single light source 223 or a plurality of light sources 223 may be provided in the light source device 220. For example, a plurality of light sources 223 may include a first light source 223a, a second light source 223b, and a third light source 223c. The first to third light sources 223a to 223c may emit light in the same direction or in different directions. For example, the first light source 223a and the third light source 223c may be positioned to face each other. The first light source 223a and the third light source 223c may be positioned to overlap with each other in the first direction (the X-axis direction). The second light guide LG2 may be positioned between the first light source 223a and the third light source 223c. Accordingly, the second light guide LG2 may overlap with the first light source 223a and the third light source 223c. The second light source 223b may be positioned between the first light source 223a and the third light source 223c. The first to third light sources 223a to 223c may emit light toward the second light guide LG2. The second light source 223b may overlap with the second light guide LG2 in the second direction. With this configuration, the optical device 200 may have the compact light source device 220.

In addition, one or more of the first light source 223a, the second light source 223b, and the third light source 223c may emit light with the same wavelength or color or with different wavelengths or colors. For example, the first light source 223a, the second light source 223b, and the third light source 223c may emit red, green, and blue light, respectively.

The second light guide LG2 may include a second prism. The second prism may include, for example, an X-prism as a reflection member. As an embodiment, the second light guide LG2 or the second prism may have a structure in which at least two prisms are coupled to each other.

The second prism may have at least two coated surfaces (reflection members or reflection sheets). One of the at least two coated surfaces may reflect light with a first wavelength and light with a second wavelength and transmit light with a third wavelength. That is, the coated surface may reflect light with a predetermined wavelength band. Accordingly, the light emitted from a plurality of light sources 223 may have a desired wavelength band and be reflected from the second light guide LG2. For example, the light passing through the second light guide LG2 may be provided to the first light guide LG1 or the medium lens MO.

The light source lens 224 may be positioned adjacent to the light source 223. For example, a plurality of light source lens 224 may be provided. The light source lens 224 may be positioned on the path of light emitted from each light source 223.

As an embodiment, the light source lens 224 may be positioned between the second light guide LG2 and the light source 223. In addition, a plurality of light source lenses 224 may be provided. The plurality of light source lenses 224 may be positioned between the second light guide LG2 and the light source 223. Alternatively, the plurality of light source lenses 224 may be provided in such a manner as to correspond to a plurality of light sources 223, respectively.

For example, the light source lens 224 may include a first light source lens 224a, a second light source lens 224b, and a third light source lens 224c. The first light source lens 224a may be positioned between the first light source 223a and the second light guide LG2. The second light source lens 224b may be positioned between the second light source 223b and the second light guide LG2. The third light source lens 224c may be positioned between the third light source 223c and the second light guide LG2.

In addition, a plurality of first light source lenses 224a, a plurality of second light source lenses 224b, and a plurality of third light source lenses 224c may be positioned on the first light source 223a, the second light source 223b, and the third light source 223c, respectively. For example, any one of the plurality of first light source lenses 224a may be positioned on the first light source 223a and coupled to the light source assembly 221. Another one of the plurality of first light source lenses 224a may be positioned between the previously positioned and coupled first light source lens 224a and the second light guide LG2 and coupled to the housing 222.

The first light source lens 224a, the second light source lens 224b, and the third light source lens 224c may include a collimation lens and a collimator.

In addition, a substrate 225 connected to the light source 223 may be arranged in the light source assembly 221. At least one substrate 225 may be provided in a manner that corresponds to the light source 223. For example, a plurality of substrates 225 may include a first substrate 225a, a second substrate 225b, and a third substrate 225c. As described above, the plurality of substrates 225 may either form a single integrated substrate or correspond to the number of the light sources.

In addition, the substrate 225 may be electrically connected to a control unit or a processor within the above-described frame (or display unit). To this end, the substrate 225 may include a connector for communication with either an external apparatus or a connected apparatus. Moreover, the substrate 225 may be arranged outside the light source 223 and dissipate heat generated in the light source to the outside. Accordingly, the reliability of the light source device 220 can be improved.

The medium lens MO may be positioned between the opening 222h and the second light guide LG2. In addition, the medium lens MO may be positioned between the first light guide LG1 and the second light guide LG2.

The medium lens MO may include a plurality of lenses. For example, the medium lens MO may include a first medium lens MO1 and a second medium lens MO2. However, as described below, without the medium lens MO, light reflected from the second light guide LG2 may also be provided directly to the first light guide LG1.

The first medium lens MO1 may have a first surface MO1s1 adjacent to the first light guide LG1 and a second surface MO1s2 corresponding to the first surface MO1s1. Light emitted from the light source 223 may pass through the second light guide LG2 and then pass through the first surface MO1s1 and the second surface MO1s2 sequentially.

The second surface MO1s2 may be convex toward the second light guide LG2. Alternatively, the second surface MO1s2 may be concave toward the first light guide LG1. Moreover, the first surface MO1s1 may be either convex or concave toward the second light guide LG2. For example, the first medium lens MO1 may have the shape of a meniscus. Since the second surface MO1s2 is convex toward the second light guide LG2 in this manner, light may converge while passing through the medium lens MO. Accordingly, the regularity or uniformity of the light provided to the light signal generation unit 230 can be improved. In other words, light incident on the light signal generation unit 230 may be surface light. Then, the uniformity of the surface light can be improved. Accordingly, through the optical device 200 according to the embodiment, the accuracy or resolution of either an image signal or an image can be improved.

The second medium lens MO2 may include a microlens array (MLA). Accordingly, surface-illumination may be partially performed on the light passing through the second light guide LG2.

Moreover, the second medium lens MO2 may have a different size than the second light guide LG2. In addition, the first medium lens MO1 may have a different size than the second light guide LG2. For example, the medium lens MO2 is greater in size than the second light guide LG2.

Moreover, positions of a plurality of lenses L, positions of a plurality of medium lenses MO, and positions of a plurality of light source lenses 224 may be maintained by spacers SP. For example, a plurality of spaces SP adjacent to the plurality of lenses L may be present within the barrel 210. In addition, a plurality of spaces SP adjacent to the medium lens MO and the light source lens 224 may be arranged in either the housing 222 or the light source assembly 221 of the light source device 220. As an embodiment, the plurality of spaces SP may be arranged on top of or underneath the above-described lens and thus fix or maintain the position of the lens.

The light signal generation unit 230 may be positioned under the lower end of the barrel 210. The light signal generation unit 230 may overlap with the lens L either in the optical axis or in the first direction (the X-axis direction).

The light signal generation unit 230 may convert light that is incident on the first light guide LG1, reflected, and then passes through the N-th lens, into a light signal including image information.

The light signal generation unit 230 may reflect light (the first polarized light) reflected from the first light guide LG1. The light signal generation unit 230 may generate a light signal including image information. That is, light emitted from the light signal generation unit 230 may be light including image information.

The light signal generation unit 230 may include a liquid crystal on silicon (LCoS) device.

The liquid crystal on silicon device may have a structure in which liquid crystal is dispensed between a silicon wafer (a thin circular substrate material for semiconductors) with a complementary metal-oxide semiconductor (CMOS) array, and an anti-reflection (AR) member coated with a transparent electrode (Indium Tin Oxide (ITO)).

An alignment layer may be formed on top of a wafer (a silicon wafer) and thus form an initial liquid crystal orientation.

Moreover, either a reflection layer or a reflection electrode that is formed as an aluminum layer and has a high optical reflectance may be positioned underneath the alignment layer. The reflection electrode may be positioned on top of the silicon wafer. A semiconductor array (CMOS array) may be formed on the silicon wafer. Transmission of a data signal to this semiconductor array through the panel may be achieved.

The light signal generation unit 230 may reflect at least one portion of the incident light, depending on driving. The light signal generation unit 230 may reflect light incident as a surface light source on a per-pixel basis. In addition, the intensity of the reflected light may also be adjusted according to the degree of modulation. For example, the light signal generation unit 230 may modulate one portion of the first polarized light into the second polarized light. Accordingly, the light modulated into the second polarized light may pass through the first light guide LG1 and the first lens L1 and then be provided to the display unit.

That is, the light signal generation unit 230 may modulate the retardation of the modulated light, that is, the polarized light. The light signal generation unit 230 may perform the retardation of the first polarized light in various ways. That is, an electric field may be formed by adjusting voltage for each pixel (voltage of an electrode). The degree to which liquid crystal is twisted may also be adjusted according to the adjusted voltage. For example, when a maximum voltage is applied, all of the light reflected from the light signal generation unit 230 may be reflected from the first light guide LG1. When a minimum voltage is applied, all of the light reflected from the light signal generation unit 230 may pass through the second light guide LG1. However, the operation may also be performed in an opposite manner according to the electric field. In addition, when a middle level of voltage is applied, one portion of the light may pass through the first light guide LG1. That is, the intensity (for example, the brightness) of the light provided to the display unit may be at a middle level. Alternatively, the operation may also be performed in an opposite manner.

In this manner, a light signal generated by the light signal generation unit 230 may be transferred to the first lens L1 through the N-th lens Ln and the first light guide LG1. Moreover, at least one portion of the light signal generated by the light signal generation unit 230 may pass through the first lens L1 and be incident on the display unit.

Additionally, a transparent member 240 may be further arranged between the light signal generation unit 230 and the N-th lens Ln (or the first light guide). The transparent member 240 may be a glass pane. The transparent member 240 may be coupled to the barrel 210 or the cover CV. Moreover, the transparent member 240 may be positioned over the light signal generation unit 230. Accordingly, foreign material can be easily blocked from being introduced into the light signal generation unit 230. The transparent member 240 may have the same size as or a different size than the light signal generation unit 230. Moreover, the transparent member 240 may overlap with at least one portion of the light signal generation unit 230 either in the optical axis or in the first direction (the X-axis direction).

With reference further to FIG. 11a, light La, light Lb, and light Lc. which are emitted from the light sources 223, respectively, of the light source device 220 may pass through the light source lens 224, the second light guide LG2, and the medium lens MO. For example, first light La, second light Lb, and third light Lc, which are emitted from the first to third light sources 223a to 223b, respectively, may be emitted from the second light guide LG2 in the same direction.

For example, the second light guide LG2 may have a first coated surface LG2a and a second coated surface LG2b. As described above, one of the at least two coated surfaces may reflect one or two of the following: light with the first wavelength, light with the second wavelength, or light with the third wavelength. For example, the first wavelength includes a wavelength band of red light. The second wavelength includes a wavelength band of green light. The third wavelength includes a wavelength band of blue light.

In addition, the first coated surface LG2a may reflect the first light La or light with the first wavelength. That is, the first coated surface LG2a may transmit the second light Lb and the third light Lc. In other words, the first coated surface LG2a may transmit light with the second wavelength and light with the third wavelength.

The second coated surface LG2b may reflect the second light Lb or light with the second wavelength. That is, the second coated surface LG2b may transmit the first light La and the third light Lc. In other words, the second coated surface Lg2b may transmit light with the first wavelength and light with the third wavelength.

Accordingly, from the second light guide LG2, the first light La may be reflected to or be incident on the medium lens MO or the opening portion OP. From the second light guide LG2, the second light Lb may be reflected to or be incident on the medium lens MO or the opening portion OP. In addition, from the second light guide LG2, the third light Lc may be reflected to or be incident on the medium lens MO or the opening portion OP.

Accordingly, light IL (or La, Lb, and Lc) emitted from the light source 223 may be incident on the first light guide LG. At this point, light that is incident on the first light guide LG may be first incident light IL.

With reference further to FIG. 12a, one portion of the first incident light IL may be reflected from the first light guide LG1, and one portion of the first incident light IL may pass through the first light guide LG1. That is, the first light guide LG1 may reflect the first polarized light ILa of the first incident light IL and transmit the second polarized light ILb. For example, the first polarized light ILa and the second polarized light ILb may each be a different type of S/P light. Accordingly, the first polarized light ILa that is one portion of the first incident light IL may be provided to the light signal generation unit 230 through the N-th lens Ln. The second polarized light ILb may be absorbed into the barrel 210 or be provided to the additional hole 210h.

With reference further to FIG. 12b, the light signal generation unit 230, as described above, may reflect the first polarized light ILa by adjusting voltage. In an embodiment, the first polarized light ILa reflected from the light signal generation unit 230 is described below as reflected polarized light.

In this manner, the first light guide LG1 may reflect at least one portion of the light IL, which is emitted from the light source 223 and incident on the first light guide, to the N-th lens (or the light signal generation unit). That is, at least one portion of the reflected polarized light may be reflected from the first light guide LG1. However, as described above, according to the voltage applied by the light signal generation unit 230, all of the reflected polarized light may either be reflected from or pass through the first light guide LG1. The reflected polarized light is described below on the assumption that at least one portion of the reflected polarized light passes through the first light guide LG1.

The reflected polarized light may include first reflected polarized light ILaa passing through the first light guide LG1, and a second reflected polarized light ILab reflected from the first light guide LG1. As described above, the intensity of the first reflected polarized light ILaa, that is, the extent to which the reflected polarized light passes through the first light guide LG1 may be adjusted in a manner that corresponds to an image provided to the display unit.

Moreover, an optical device 200 according to an embodiment may further include a display unit which is arranged in front of the first lens L1 and on which a light signal including image information transferred to the first lens L1 is displayed as an image. In other words, the optical device 200 may have a structure that is integrally formed with the above-described display unit. However, the optical device 200 is described below on the assumption that the optical device 200 has a structure that is separated from the display unit.

Moreover, as a modification example, as illustrated in FIG. 12b, the barrel 210 may further have the additional hole 210h in the lateral surface. For example, the second polarized light may be provided to the additional hole 210h. The description of the first embodiment may apply in the same manner to a modification example.

With reference to FIG. 12c, according to another modification example, the distance between a plurality of lenses and the first light guide LG1 within the barrel 210 may differ. Except for the content described below, the content described in each embodiment in the present specification may apply.

In the present example, among a plurality of lenses L, the second lens L2 may be arranged between the first lens L1 and the N-th lens Ln. The second lens L2 may be arranged between the first light guide LG1 and the N-th lens Ln.

At least one portion of the light signal generated by the light signal generation unit 230 may pass through the second lens L2 before passing through or being reflected from the first light guide LG1. For example, at least one portion of the reflected polarized light may first pass through the second lens L2 before the first light guide LG1.

With reference further to FIG. 12d, according to still another modification example, unlike in the optical device in the first embodiment, the distance between a plurality of lenses and the first light guide LG1 within the barrel 210 may differ. Except for the content described below, the content described in each embodiment in the present specification may apply.

In addition, in an optical device according to still another modification example, the medium lens MO may not be present between the first light guide LG1 and the second light guide LG2. Accordingly, a decrease in optical efficiency due to the absorption of one portion of light can be prevented.

In addition, at least one of the first and second medium lenses may not be present. For example, only the second medium lens (or the first medium lens) may be present between the first light guide LG1 and the second light guide LG2.

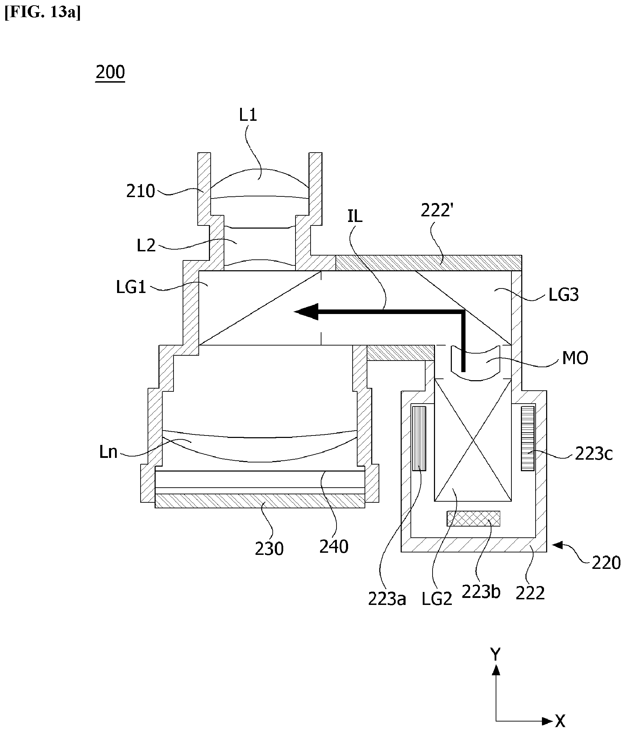

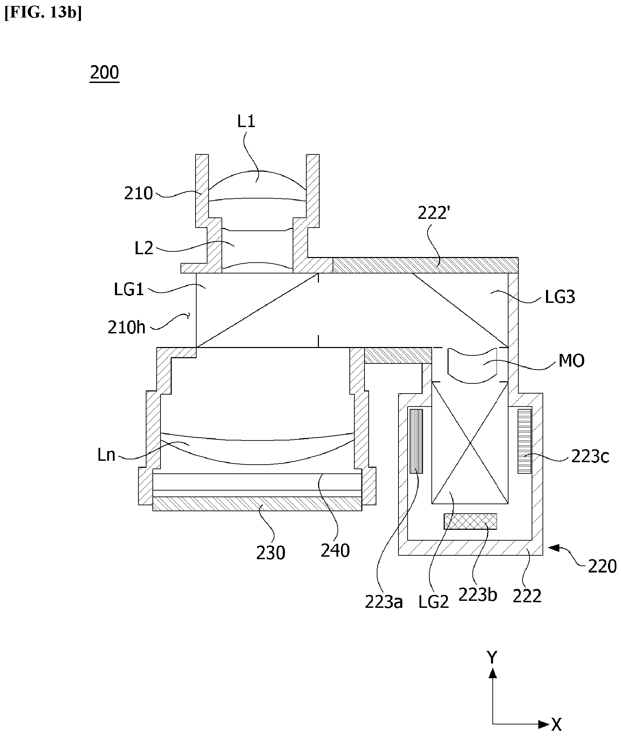

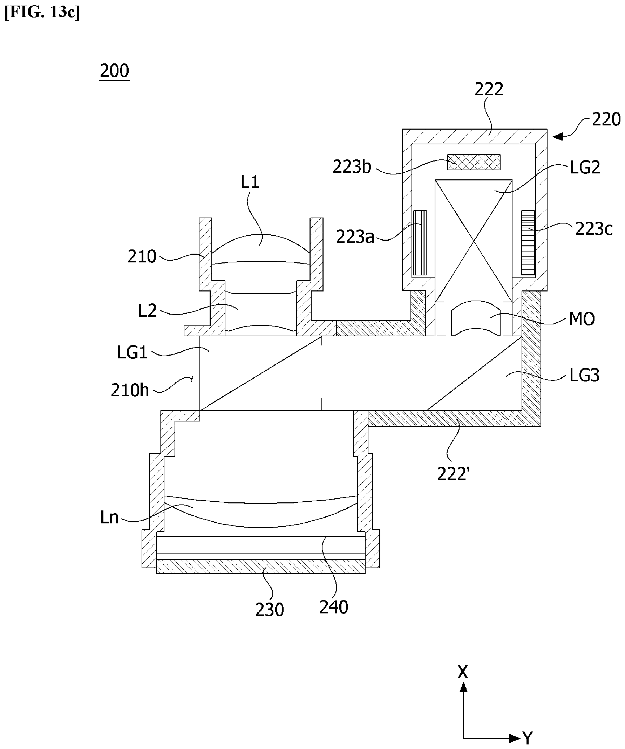

FIG. 13a is a conceptual view illustrating an optical device according to a second embodiment. FIG. 13b is a view illustrating a modification example of the optical device in FIG. 13a. FIG. 13c is a view illustrating another modification example of the optical device in FIG. 13a.

With reference to FIG. 13a, the optical device 200 according to the second embodiment may include a third light guide LG3 arranged between the first light guide LG1 and the second light guide LG2. Except for the content described below in the present embodiment, the content described in each embodiment in the present specification may apply.

In addition, the optical device 200 may include a middle housing 222' arranged between the housing 222 and the barrel 210. For example, the middle housing 222' may be connected to the opening portion OP in the barrel 210. That is, the middle housing 222' may be positioned in a manner that corresponds to the opening portion in the barrel 210.

The third light guide LG3 may be positioned in the middle housing 222'. The third light guide LG3 may include a third prism. The third light guide LG3 may change the path of the light emitted from the second light guide LG2. For example, the housing 222 may be integrally formed with the middle housing 222'.

In addition, the housing 222 may be arranged in parallel with the barrel 210 by the third light guide LG3. For example, the light emitted from the second light guide LG2 may propagate in parallel with the optical axis or the first direction. Likewise, light or a light signal that is reflected from or occurs in the light signal generation unit 230 may also propagate along the optical axis.

Accordingly, the optical device 200 can be miniaturized in a manner that corresponds to the structure (for example, the frame) of the electronic device. In other words, the length or thickness in one direction of the optical device 200 can be easily adjusted.

In the present example, the third light guide LG3 may overlap with the second light guide LG2 in the first direction (the X-axis direction). Then, the third light guide LG3 may overlap with the opening portion OP in the second direction (the Y-axis direction). In addition, the third light guide LG3 may overlap with the first light guide LG1 in the second direction (the Y-axis direction).

The opening in the housing 222 may be connected to the middle housing 222'. The middle housing 222' may have two holes (for inlet and outlet) in order to secure a light path.

With reference to FIG. 13b, an optical device 200 according to a modification example may include the third light guide LG3 arranged between the first light guide LG1 and the second light guide LG2. Except for the content described below in the present embodiment, the content described in each embodiment in the present specification may apply.

In the present example, as illustrated, the barrel 210 may further have the additional hole 210h in the lateral surface. For example, the second polarized light may be provided to the additional hole 210h.

With reference to FIG. 13c, an optical device 200 according to another modification example may include the third light guide LG3 arranged between the first light guide LG1 and the second light guide LG2. Except for the content described below in the present embodiment, the content described in each embodiment in the present specification may apply.

Moreover, as illustrated in FIG. 13b, the barrel 210 may further have the additional hole 210h in the lateral surface. For example, the second polarized light may be provided to the additional hole 210h. However, the additional hole 210h may also not be present within the barrel 210.

In addition, the housing 222 may be arranged in parallel with the barrel 210 by the third light guide LG3. For example, the light emitted from the second light guide LG2 may propagate in parallel with the optical axis or the first direction. At this point, the light emitted from the second light guide LG2 may be emitted in the opposite direction to the first direction. Likewise, light or a light signal that is reflected from or occurs in the light signal generation unit 230 may also propagate along the optical axis.

Accordingly, the optical device 200 can be miniaturized in a manner that corresponds to the structure (for example, the frame) of the electronic device. In other words, the length or thickness in one direction of the optical device 200 can be easily adjusted.

In the present example, the third light guide LG3 may overlap with the second light guide LG2 in the first direction (the X-axis direction). Then, the third light guide LG3 may overlap with the opening portion OP in the second direction (the Y-axis direction). In addition, the third light guide LG3 may overlap with the first light guide LG1 in the second direction (the Y-axis direction).

The middle housing 222' may have an opening in the top. Accordingly, the housing 222 may be positioned adjacent to the first lens L1. For example, the housing 222 may be positioned more adjacent to the first lens than the N-th lens. For example, the first lens L1 may overlap with the housing 222 in the second direction (the Y-axis direction).

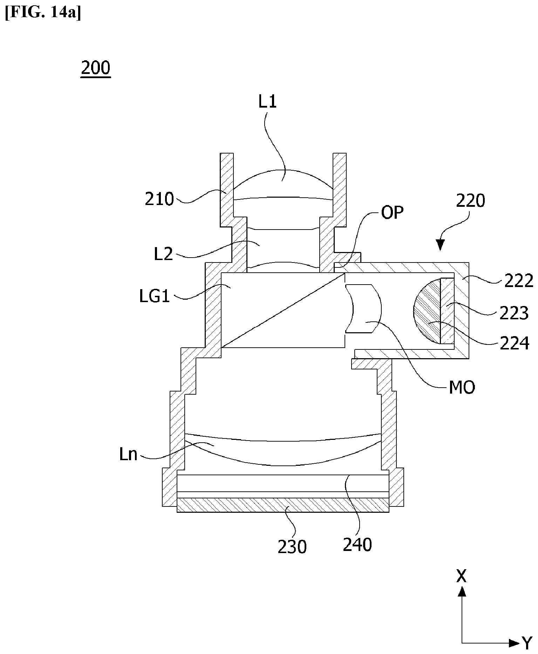

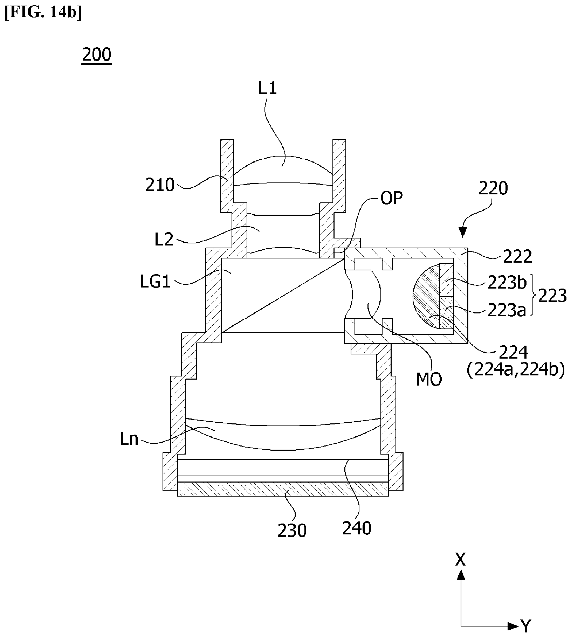

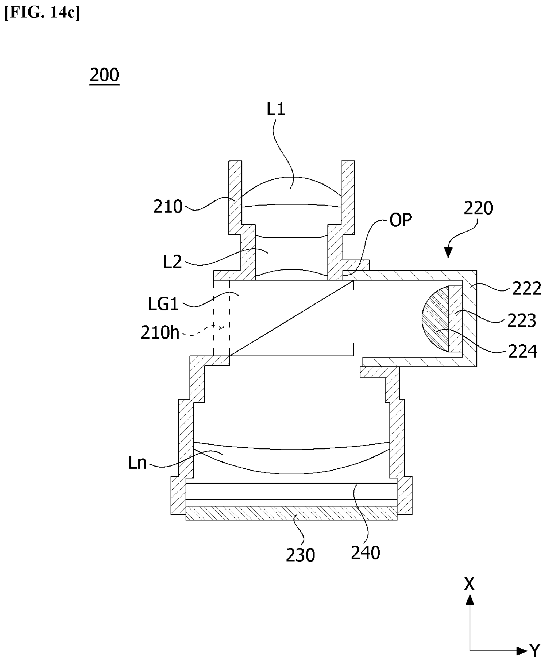

FIG. 14a is a conceptual view illustrating an optical device according to a third embodiment. FIG. 14b is a view illustrating a modification example of the optical device in FIG.14a. FIG. 14c is a view illustrating another modification example of the optical device in FIG. 14a.

With reference to FIG. 14a, the optical device 200 according to the third embodiment may include only the first light guide LG1. The second light guide and the third light guide are not present in the above-described light source device 220. Except for the content described below in the present embodiment, the content described in each embodiment in the present specification may apply.

In addition, the light source 223 may be provided as a single light source. Moreover, the medium lens MO may be positioned between the light source 223 and the first light guide LG1.

In the present embodiment, only one beam of light may be provided to the display unit by one light source 223. For example, in a case where only information is provided to the user, the light source device may have only one light source.

Moreover, the light source lens 224 may be provided on top of the light source 223. Accordingly, the light source lens 224 may be positioned between the light source 223 and the medium lens MO. In addition, the light source lens 224 may be positioned between the light source 223 and the first light guide LG1. In addition, the first light guide LG1, the medium lens MO, the light source lens 224, and the light source 223 may overlap with one another in the second direction (the Y-axis direction).

With reference to FIG. 14b, an optical device 200 according to a modification example may include only the first light guide LG1. The second light guide and the third light guide are not present in the above-described light source device 220. Except for the content described below in the present embodiment, the content described in each embodiment in the present specification may apply.

The light source 223 may emit two beams of light. For example, the two beams of light may be two of the following: red light, green light, or blue light. Alternatively, the beams of light may also include white light.

In addition, the medium lens MO may be arranged in the housing 222 of the light source device 220. The medium lens MO may be positioned between the light source 223 and the first light guide LG1.

Moreover, the light source lens 224 may be provided on top of the light source 223. Accordingly, the light source lens 224 may be positioned between the light source 223 and the medium lens MO. In addition, the light source lens 224 may be positioned between the light source 223 and the first light guide LG1. In addition, the first light guide LG1, the medium lens MO, the light source lens 224, and the light source 223 may overlap with one another in the second direction (the Y-axis direction).

Two light source lenses 224 may be positioned on top of two light sources 223, one on each. In addition, one light source lens 224 may be positioned on top of two light sources 223.

With reference to 14c, an optical device 200 according to another modification example may include only the first light guide LG1. The second light guide and the third light guide are not present in the above-described light source device 220. Except for the content described below in the present embodiment, the content described in each embodiment in the present specification may apply.

The light source 223 may emit two beams of light. For example, the two beams of light may be two of the following: red light, green light, or blue light. Alternatively, the beams of light may also include white light.

In addition, the medium lens MO may not be arranged in the housing 222 of the light source device 220. The light source lens 224 may be arranged on top of the light source 223. Accordingly, the light source lens 224 may be arranged between the light source 223 and the first light guide LG1. In addition, the first light guide LG1, the light source lens 224, and the light source 223 may overlap with one another in the second direction (the Y-axis direction).

In addition, two light source lenses 224 may be positioned on top of two light sources 223, one on each. In addition, one light source lens 224 may be positioned on top of two light sources 223.

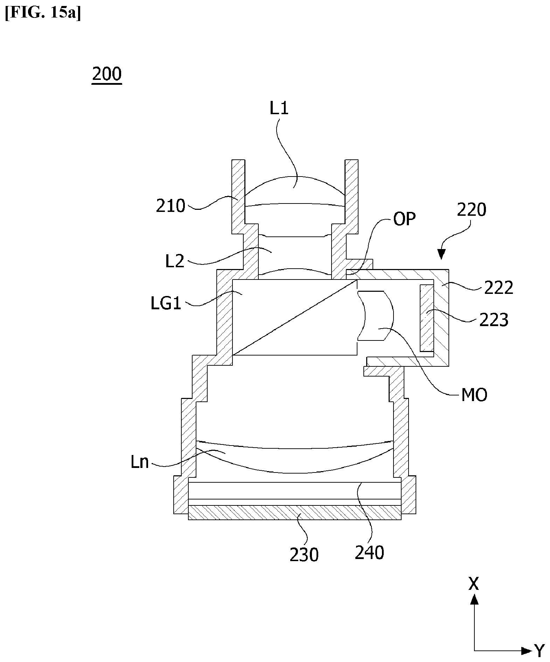

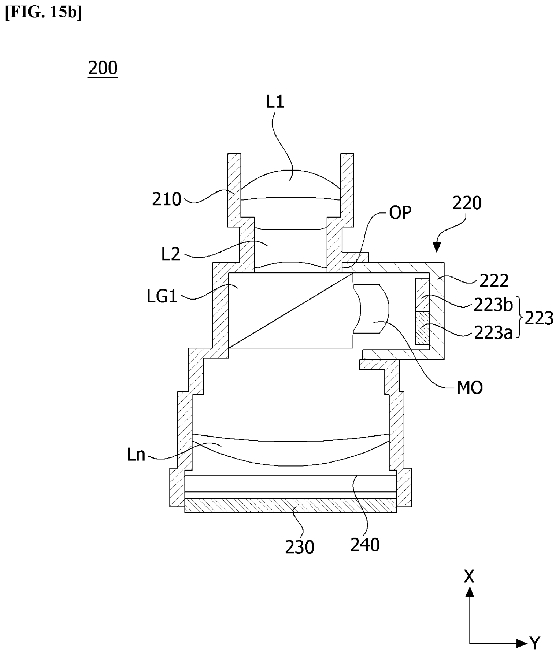

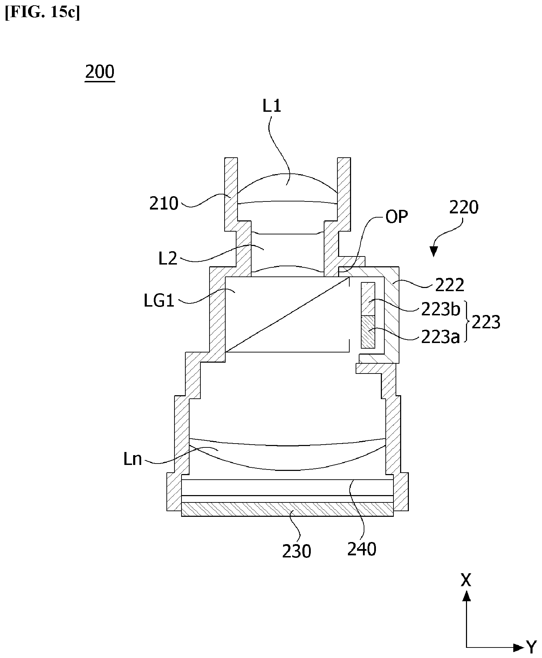

FIG. 15a is a conceptual view illustrating an optical device according to a fourth embodiment. FIG. 15b is a view illustrating a modification example of the optical device in FIG. 15a. FIG. 15c is a view illustrating another modification example of the optical device in FIG. 15a.

With reference to FIG. 15a, the optical device 200 according to the fourth embodiment may include only the first light guide LG1. In addition, the light source lens may not be present on top of the light source 223. In addition, the third light guide and the third light guide are not present in the light source device 220. Except for the content described below in the present embodiment, the content described in each embodiment in the present specification may apply.

In addition, the light source 223 may be provided as a single light source. Moreover, the medium lens MO may be positioned between the light source 223 and the first light guide LG1.

In the present embodiment, only one beam of light may be provided to the display unit by one light source 223. For example, in a case where only information is provided to the user, the light source device may have only one light source.

Moreover, the medium lens MO may be positioned between the light source 223 and the first light guide LG1. In addition, the first light guide LG1, the medium lens MO, and the light source 223 may overlap with one another in the second direction (the Y-axis direction).

With reference to 15b, an optical device 200 according to a modification example may include only the first light guide LG1. The second light guide and the third light guide are not present in the above-described light source device 220. Except for the content described below in the present embodiment, the content described in each embodiment in the present specification may apply.

The light source 223 may emit two beams of light. For example, the two beams of light may be two of the following: red light, green light, or blue light. Alternatively, the beams of light may also include white light.

In addition, the medium lens MO may be arranged in the housing 222 of the light source device 220. The medium lens MO may be positioned between the light source 223 and the first light guide LG1.

In addition, the first light guide LG1, the medium lens MO, and the light source 223 may overlap with the second direction (the Y-axis direction).

With reference to 15c, an optical device 200 according to another modification example may include only the first light guide LG1. The second light guide and the third light guide are not present in the above-described light source device 220. Except for the content described below in the present embodiment, the content described in each embodiment in the present specification may apply.

The light source 223 may emit two beams of light. For example, the two beams of light may be two of the following: red light, green light, or blue light. Alternatively, the beams of light may also include white light.

In addition, the medium lens MO may not be arranged in the housing 222 of the light source device 220. The light source lens 224 may be arranged on top of the light source 223. Light emitted from the light source 223 may be incident directly on the first light guide LG1.

In addition, the first light guide LG1 and the light source 223 may overlap with each other in the second direction (the Y-axis direction).

Moreover, it should be understood that the barrel 210 in FIGS. 13a to 13c, FIGS. 14a to 14c, and FIGS. 15a to 15c may also include the additional hole 210h positioned adjacent to the first light guide LG1.

## Claims

1. An optical device comprising:
a plurality of lenses;
a barrel in which the plurality of lenses are arranged;
a first light guide arranged in the barrel; and
an opening portion formed in a lateral surface of the barrel,
wherein the first light guide is arranged between two lenses of the plurality of lenses, and
wherein the opening portion overlaps with the first light guide in a direction perpendicular to an optical axis.

2. The optical device of claim 1, comprising:
a light source device coupled to the opening portion,
wherein the light source device comprises:
a housing in which an opening is formed;
a second light guide arranged in the housing; and
a light source emitting light toward the second light guide.

3. The optical device of claim 2, comprising:
a medium lens arranged between the opening and the second light guide.

4. The optical device of claim 2, comprising:
a light signal generation unit generating a light signal including image information,
wherein the plurality of lenses include a first lens arranged at the remotest position from the light signal generation unit, and an N-th lens most adjacent to the light signal generation unit, and
wherein the first light guide is positioned between the first lens and the N-th lens.

5. The optical device of any one of claims 2 to 4, wherein the first light guide includes a first prism, and the second light guide includes a second prism.

6. The optical device of claim 5, wherein the first prism includes a polarized separation member that reflects first polarized light and transmits second polarized light, and the second prism results from coupling at least two prisms.

7. The optical device of claim 5, wherein the second prism has at least two coated surfaces, and one of the at least two coated surfaces reflects light with a first wavelength and light with a second wavelength and transmits light with a third wavelength.

8. The optical device of any one of claims 2 to 4, comprising:
a third light guide arranged between the first light guide and the second light guide.

9. The optical device of claim 8, wherein the third light guide includes a third prism.

10. The optical device of claim 1, wherein the plurality of lenses are arranged in the barrel and include a first lens that is arranged at the uppermost position and an N-th lens that is arranged at the lowermost position.
